(19) Europäisches Patentamt
European Patent Office
Office européen des brevets

(11) **EP 3 794 701 B1**

(12) **EUROPÄISCHE PATENTSCHRIFT**

(45) Veröffentlichungstag und Bekanntmachung des Hinweises auf die Patenterteilung:
**14.06.2023 Patentblatt 2023/24**

(21) Anmeldenummer: **19715076.6**

(22) Anmeldetag: **01.04.2019**

(51) Internationale Patentklassifikation (IPC):
**H02H 3/20** (2006.01)

(52) Gemeinsame Patentklassifikation (CPC):
**H02H 3/202; H02H 3/207**

(86) Internationale Anmeldenummer:
**PCT/EP2019/058150**

(87) Internationale Veröffentlichungsnummer:
**WO 2019/219284 (21.11.2019 Gazette 2019/47)**

(54) **SCHALTUNGSANORDNUNG ZUM SCHUTZ EINER ELEKTRONISCHEN BAUGRUPPE**

CIRCUIT ARRANGEMENT FOR PROTECTING AN ELECTRONIC ASSEMBLY

CIRCUIT DE PROTECTION D'UN COMPOSANT ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2018 DE 102018207503**

(43) Veröffentlichungstag der Anmeldung:
**24.03.2021 Patentblatt 2021/12**

(73) Patentinhaber: **Continental Automotive Technologies GmbH**
**30165 Hannover (DE)**

(72) Erfinder: **LEHMANN, Sören**
**60488 Frankfurt am Main (DE)**

(74) Vertreter: **Continental Corporation**
**c/o Continental Teves AG & Co. OHG**
**Intellectual Property**
**Guerickestraße 7**
**60488 Frankfurt a. Main (DE)**

(56) Entgegenhaltungen:
EP-A1- 2 582 001    EP-A1- 2 632 047
CN-B- 102 931 627    DE-A1- 10 349 282
US-A1- 2007 064 362

**Beschreibung**

Die vorliegende Erfindung betrifft eine Schaltungsanordnung zum Schutz einer elektronischen Baugruppe.

Mit Gleichstrom versorgte elektronische Baugruppen, nachfolgend auch abgekürzt mit EB bezeichnet, insbesondere wenn es sich um Steuergeräte oder Sensoren im Automotivebereich handelt, erfordern gemeinhin eine Schutzeinrichtung in ihrem Betriebsspannungspfad, insbesondere gegen Überspannung und Verpolung, d.h. gegen positive wie auch negative Spannungen, die außerhalb des regulären Versorgungsspannungsbereichs auftreten. Dies dient allgemein der Betriebssicherheit bei auftretenden Spannungsspitzen im regulären Betrieb, z.B. durch magnetische Induktion in die Betriebsspannungsleitung hinein, jedoch wird vielfach auch der Anspruch erhoben, dass die elektronische Baugruppe über einen längeren Zeitraum bzw. dauerhaft positive oder negative Überspannungen zerstörungsfrei überstehen soll. In solch einem Fall ist meist eine fehlerhafte Inbetriebnahme, d.h. ein z.B. Vertauschen von Leiteradern die Ursache für die auftretende positive oder negative Überspannung, die mit der Schutzeinrichtung beschädigungsfrei von der elektronischen Baugruppe ferngehalten werden muss.

Zu den allgemeinen Anforderungen gehört weiterhin vielfach, dass die Schutzeinrichtung autonom arbeiten soll, d.h. sie soll ihre Schutzwirkung unabhängig vom Funktions- oder Betriebszustand der übrigen elektronischen Baugruppe bereitstellen können. Dies ist insbesondere im Zusammenhang mit zu schützenden, meist redundant ausgeführten, elektronischen Baugruppen für höchste Sicherheitsansprüche von Bedeutung. In solchen EB verhindert die Schutzeinrichtung das Entstehen von sogenannten Fehlern gemeinsamen Ursprungs, weil diese redundanten EB zumeist von einer gemeinsamen Versorgungsspannung gespeist werden. Ist diese fehlerhaft, so können die redundanten Baugruppen zerstört werden und dadurch ein nicht deterministisches Verhalten annehmen, wodurch ihre Unabhängigkeit nicht mehr gewährleistet ist.

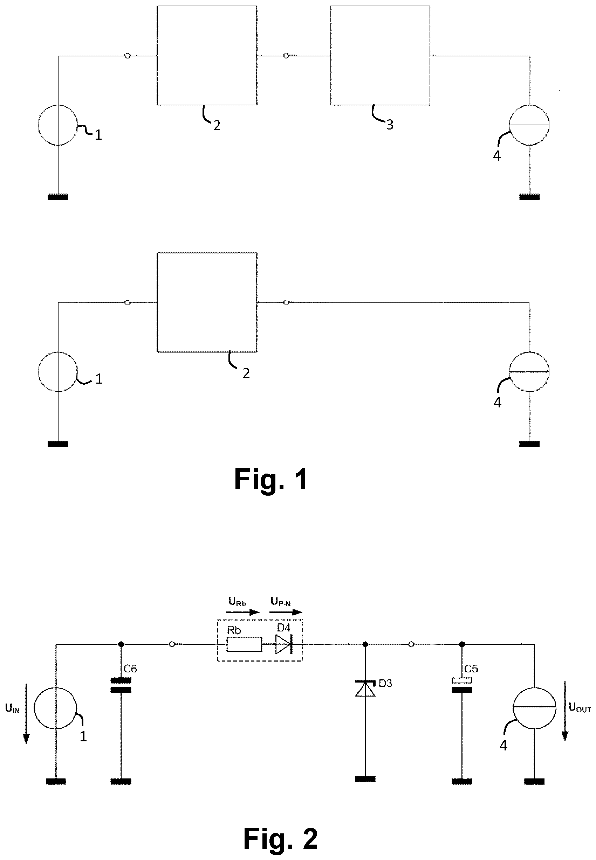

Bei den zumindest im Automotivebereich auftretenden elektronischen Baugruppen können grob, wie in Fig. 1 dargestellt, zwei Arten unterschieden werden: Die elektronische Baugruppe wird nach einer ersten Art, wie im oberen Teil von Fig. 1 dargestellt, mit relativ hoher meist unstabilisierter Bordnetzspannung, einer Spannungsquelle 1, z.B. im Bereich von 10 VDC - 48 VDC gespeist. Ein Spannungsregler 3 mit kleinem Spannungsverlust wird von der Schutzeinrichtung 2 eingangsseitig geschützt. Somit ist auch der versorgte Rest der elektronischen Baugruppe 4, hier dargestellt durch eine Stromsenke, mit geschützt. Spannungsregler mit kleinem Spannungsverlust bedeutet, dass die Eingangsspannung meist bis auf wenige 100 mV über das Spannungsstabilisierungsniveau des Spannungsreglers 3 absinken darf, ohne dass es in der elektronischen Baugruppe 4 zu Funktionseinschränkungen kommt. Von der vorgeschalteten Schutzeinrichtung 2 wird verlangt, dass diese die Mindesteingangsspannungsschwelle der elektronischen Baugruppe 4 nicht oder nur geringfügig verändert. Die Schutzeinrichtung gegen positive wie auch negative Spannungen außerhalb des regulären Betriebsspannungsbereichs darf selbst also innerhalb des regulären Betriebsspannungsbereichs nur einen vernachlässigbaren Spannungsverlust aufweisen.

Bei der zweiten Art wird die elektronische Baugruppe, wie im unteren Teil der Fig. 1 dargestellt, von einer entsprechenden Spannungsquelle 1 mit einer stabilisierten kleinen Gleichspannung, zumeist im Bereich bis 5 VDC versorgt. Diese Spannung wird i.d.R. von einem zentralen Steuergerät zur Verfügung gestellt, wobei die EB dann meist einen Sensor oder eine ähnliche Satellitenkomponente darstellt. Auch in diesem Fall schützt die Schutzeinrichtung 2 den eigentlichen elektronischen Teil der EB 4 gegen positive wie auch negative Spannungen außerhalb des regulären Betriebsspannungsbereichs. Der mit Bezug auf die erste Art formulierten Anforderung des niedrigen Spannungsverlustes durch die vorgeschaltete Schutzeinrichtung kommt bei dieser Anwendung dann besondere Bedeutung zu, wenn es sich bei der zu versorgenden Baugruppe um einen Sensor mit analoger Ausgangsgröße handelt, die von dem versorgenden Steuergerät wieder empfangen wird. In diesem Anwendungsfall wird der Sensor zumeist in ratiometrisch wirkender Arbeitsweise ausgeführt, d.h. das analoge Sensorausgangssignal wird bezogen auf die zugeführte konstante Versorgungsspannung. Auch kleine Spannungsverluste innerhalb des Sensors führen hier u.a. unmittelbar zu empfindlichen Offsetfehlern im Gesamtsystem, weil der Sensor bedingt durch den Spannungsverlust an der Schutzeinrichtung eine andere ratiometrische Bezugsgröße vorfindet als das Steuergerät. Die Ansprüche bezüglich des Spannungsverlustes im Versorgungspfad von derartigen elektronischen Baugruppen sind daher besonders hoch.

Ein typisches Beispiel einer vielfach verwendeten Schutzeinrichtung für den Betriebsspannungspfad nach der ersten Art ist in Fig. 2 dargestellt. Die von der Spannungsquelle 1 ausgehende positive oder negative Überspannung wird mit den Schaltelementen D4 und D3 versucht von der eigentlichen zu versorgen Baugruppe 4, hier wieder allgemein als Stromsenke abgebildet, fernzuhalten. Diode D4 wirkt hierbei als Gleichrichter (Serien-Ventil), der negative Spannungsanteile grundsätzlich unterdrückt und Z-Diode D3 sorgt in Form eines Parallel-Spannungsbegrenzers als Klemmschaltung dafür, dass die Spannung an der Diode die diodenindividuelle Z-Spannung nicht übersteigt. Da die elektronische Baugruppe elektrisch parallel zur Z-Diode D3 angeordnet ist, erfährt diese die identische Spannung wie Z-Diode D3 und ist damit gegen positive Überspannung geschützt, sofern die Z-Diode D3 sorgsam den Erfordernissen entsprechend dimensioniert worden ist.

Der beschriebene beispielhaft dargestellte Aufbau hat jedoch eine ganze Reihe von Nachteilen, die erkennen lassen, dass die eingangs formulierten Anforderungen nicht erfüllt werden können:

Die Verpolschutzdiode D4 liegt als Serienschalter innerhalb des Betriebsspannungspfades und verursacht daher einen merklichen Spannungsfall, der sich grob aus den zwei Komponenten stromproportionaler Spannungsfall an dem Bahnwiderstand der Diode D4 und nahezu konstanten halbleiterspezifischen Spannungsfall des p-n Übergangs der Diode D4 zusammensetzt. Beide Komponenten zusammen ergeben im Mittel einen Spannungsfall von ca. 1 V.

Die positive Spannungsbegrenzung durch Z-Diode D3 geht, da sie als Klemmschaltung ausgeführt ist, einher mit einer nennenswerten Verlustleistung an der Diode D3 im Falle der positiven Überspannung. Dies schränkt den Nutzungsbereich auf relativ energiearme Überspannungsimpulse, die entweder zeitlich kurz oder von der Quellimpedanz her hochohmig sind (kleiner Quellstrom), ein, da sonst die erlaubte Verlustleistung der Z-Diode D3 überschritten wird. Selbst die im Automotivebereich definierten Impulse positiver Überspannung, die durch induktive Verkopplung, z.B. während des Zündungslaufs des Verbrennungsmotors entstehen, gelten als bereits derart energiereich, dass diese nur mit leistungsstarken und damit großvolumigen Z-Dioden zuverlässig bewältigt werden können. Aus ökonomischer Sicht handelt es sich bei der Z-Diode D3 aufgrund der besonderen Verlustleistungsanforderungen um ein spezielles Bauelement, das verhältnismäßig hohe Kosten verursacht, also auch hierbei nicht positiv auffällt.

Nachfolgend wird auf die allgemeinen Anforderungen an eine Schutzeinrichtung gegen positive und negative Überspannungen speziell im analogen Sensorpfad elektronischer Baugruppen eingegangen. Neben zu schützenden Versorgungsspannungseingängen weisen elektronische Baugruppen gelegentlich Signalausgänge auf, die es ebenso gegen positive und negative Überspannungen zu schützen gilt. Insbesondere bei analogen Signalausgängen, wie z.B. bei Sensoren, gelten neben den bereits zuvor erläuterten Anforderungen zusätzliche, der veränderten Schnittstelle Rechnung tragende Anforderungen:

Die Schutzeinrichtung darf dem analogen Sensorsignal keine Energie entnehmen sofern sich das Sensorsignal innerhalb des regulären Sensorausgangsspannungsbereichs befindet, d.h. sich in dem Sensorpfad keine positiven oder negativen Überspannungen einstellen. Durch diese Anforderung wird vermieden, dass das meist höherimpedante analoge Sensorsignal durch abfließende Ströme der Schutzschaltung verfälscht wird. Demgegenüber ist es jedoch gestattet, dass im Falle von positiver oder negativer Überspannung aus dem Sensorpfad für die Schutzeinrichtung (Betriebs-) Ströme entnommen werden dürfen, denn die Anforderung nach autonomer Arbeitsweise der Schutzeinrichtung besteht nach wie vor und das Sensorsignal ist in diesem Betriebszustand ohnehin bereits stark verfälscht.

Analoge Sensorsignale verlaufen meist in einem anderen Spannungs (-hub) Bereich als übliche Spannungsversorgungspfade. Dieser schließt vielfach die Signalaussteuerung bis auf 0 V (Massepotenzial) mit ein. Anders als bei der Schutzeinrichtung für den Versorgungsspannungspfad muss die Schutzeinrichtung für den Sensorpfad daher in der Lage sein, Sensorspannungen innerhalb des definierten regulären Sensorausgangsspannungsbereichs (häufig 0 V...5 V) verzerrungsfrei zu übertragen.

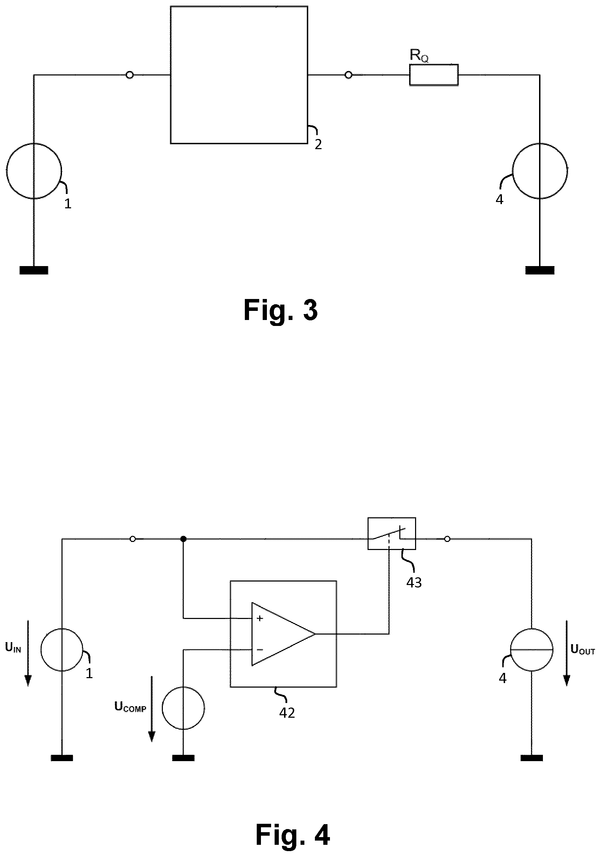

Fig. 3 zeigt den stark vereinfachten Wirkmechanismus im Sensorpfad auf. Das von dem elektrischen Bauelement 4 in Form einer Sensorquelle und Quellwiderstand RQ gelieferte Sensorsignal wird von der Schutzeinrichtung 2 gegen positive und negative Überspannungen, ausgehend von Spannungsquelle 1 geschützt, sofern diese sich außerhalb des regulären Sensorausgangsspannungsbereichs befinden. Damit sind die Sensorausgangsstufe sowie sämtliche nachgelagerte Schaltungsteile der elektronischen Baugruppe 4 vor positiven und negativen Überspannungen, die über die Sensorausgangsschnittstelle in die EB 4 gelangen, geschützt. Auch für elektronische Baugruppen, die höchsten Sicherheitsansprüchen genügen, wird mit der Schutzeinrichtung für den oder weitere Sensorpfade die Möglichkeit geschaffen, höchste Sicherheitsstandards zu erreichen, da durch den Schutz der Sensorpfade mögliche "Fehler gemeinsamen Ursprungs", die unter Umständen rückwirken auf gemeinsam genutzte Schaltungsteile, wirkungsvoll vermieden werden.

In der US 2007/0064362 A1 ist eine Schaltung zum Schutz einer elektronischen Baugruppe gezeigt, die eine als Komparator ausgebildete Teilschaltung sowie zwei Schalter aufweist. Die Teilschaltung kann eine Spannung mit einem Vergleichswert vergleichen und in Abhängigkeit von diesem Vergleich einen der beiden Schalter ansteuern.

In der EP 2 632 047 A1 ist eine weitere Schutzschaltung für eine elektronische Schaltung gezeigt, wobei diese Schaltung einen Transistor aufweist, wobei der Transistor in Abhängigkeit von einer am Transistor anliegenden Vergleichsspannung angesteuert wird.

In der DE 103 49 282 ist eine Schutzschaltung mit zwei im Stromkreis angeordneten, also Verpolschutz dienenenden Transistoren gezeigt, wobei die Transistoren den Stromkreis nur bei einer an den Gate-Anschlüssen anliegenden positiven Spannung schließen. Des Weiteren ist ein dritter Transistor vorgesehen, der bei einer Überspannung die Transistoren ansteuern und dadurch den Stromkreis unterbrechen kann.

Es ist daher Aufgabe der Erfindung, den zuvor erläuterten Anforderungen so gut wie möglich gerecht zu werden beziehungsweise die aufgezeigten Nachteile herkömmlicher Schaltungsanordnungen zum Schutz einer elektronischen Baugruppe zu vermeiden beziehungsweise eine Schaltungsanordnung mit hohem Sicherheitsanspruch bereitzustellen. Diese Aufgabe wird durch eine Schaltungsanordnung gemäß des Anspruchs 1 gelöst.

Bevorzugte Ausführungsformen der Erfindung sind Gegenstand der abhängigen Ansprüche und der Beschreibung.

Gemäß einem Aspekt der Erfindung umfasst eine Schaltungsanordnung zum Schutz einer elektronischen Baugruppe, die elektronische Baugruppe, eine Spannungsquelle und eine zwischen die elektronische Baugruppe und die Spannungsquelle geschaltete erste Teilschaltung, wobei die erste Teilschaltung einen Komparator und einen elektronisch steuerbaren Schalter umfasst,

wobei der Komparator ausgebildet ist, eine Spannung der Spannungsquelle mit einer Vergleichsspannung zu vergleichen und davon abhängig den Schalter anzusteuern, wobei der Schalter zu der elektronischen Baugruppe in Reihe geschaltet ist. Bezüglich der ersten Teilschaltung sei zusätzlich auch auf die Figurenbeschreibung zu Fig. 4 verwiesen. Die Vergleichsspannung wird vorzugsweise mittels einer Z-Diode bereitgestellt, die eine vorhandene Spannung, bspw. die von der Spannungsquelle bereitgestellte Spannung konstant und stabil hält.

Die Schaltungsanordnung weist neben der ersten Teilschaltung eine zwischen die elektronische Baugruppe und die Spannungsquelle geschaltete zweite Teilschaltung auf, wobei die zweite Teilschaltung einen Komparator und einen elektronisch steuerbaren Schalter umfasst, wobei der Komparator ausgebildet ist, negative Spannungsdifferenzen zwischen der Spannungsquelle und der Spannung an der elektronischen Baugruppe zu erfassen und davon abhängig den Schalter anzusteuern, wobei der Schalter zu der elektronischen Baugruppe in Reihe geschaltet ist.

Der Komparator der ersten und / oder der zweiten Teilschaltung weist einen bipolaren Transistor auf, insbesondere in pnp-Ausführung, wobei dessen Basis bei der ersten Teilschaltung über einen Vorwiderstand an die Vergleichsspannung bzw. deren Quelle angeschlossen ist und insbesondere wirksam beeinflusst wird und bei der zweiten Teilschaltung an die Spannungsquelle angeschlossen ist bzw. die Spannungsquelle die Bezugsgröße darstellt.

Der Komparator der ersten und zweiten Teilschaltung ist identisch. Mit anderen Worten teilen sich die beiden Teilschaltungen einen Komparator beziehungsweise einen Schalter, beispielsweise in Form eines Transistors, der die Funktion des Komparators bereitstellt. Hierbei ist allerdings zu beachten, dass die Wirkungsweise des Komparators für die unterschiedlichen Teilschaltungen unterschiedlich sein kann, wie in Zusammenhang mit der Figurenbeschreibung der Figuren 4 bis 19 erläutert wird.

Es ist bevorzugt, dass die Komponenten der ersten Teilschaltung zum Schutz der elektronischen Baugruppe gegen eine positive Überspannung und die Komponenten der zweiten Teilschaltung zum Schutz der elektronischen Baugruppe gegen eine negative Überspannung ausgebildet sind.

Nach einer bevorzugten Ausführungsform ist der Schalter der ersten Teilschaltung als selbstsperrender Transistor, insbesondere als p-Kanal Isolierschicht-Feldeffekttransistor, ausgeführt, wobei dessen Source-Elektrode an die Spannungsquelle und dessen Drain-Elektrode an die elektronische Baugruppe angeschlossen ist und dessen Gate-Elektrode auf Massepotenzial bezogen ist.

Bevorzugt ist der Schalter der zweiten Teilschaltung als selbstsperrender Transistor, insbesondere als p-Kanal Isolierschicht-Feldeffekttransistor, ausgeführt, wobei dessen Source-Elektrode an die elektronische Baugruppe und dessen Drain-Elektrode an die Spannungsquelle angeschlossen ist und dessen Gate-Elektrode auf Massepotenzial bezogen ist.

Vorzugsweise ist der bipolare Transistor des Komparators mit seinem Emitter an den Source-Elektroden und mit seinem Kollektor an den Gate-Elektroden der jeweiligen selbstsperrenden Transistoren der ersten und zweiten Teilschaltung angeschlossen.

Es ist bevorzugt, dass jeweils die Source-Elektroden und die Gate-Elektroden der selbstsperrenden Transistoren miteinander elektrisch leitend verbunden sind.

Es ist bevorzugt, dass die Schalter der ersten und zweiten Teilschaltung als Doppelschalter in einem Bauteil zusammengefasst und / oder alle Widerstände der Schaltungsanordnung gleich hohe Widerstandswerte aufweisen, um Bauteilkosten einzusparen.

Vorzugsweise ist der Schalter der zweiten Teilschaltung als selbstsperrender Isolierschicht-Feldeffekttransistor ausgeführt, wobei dessen Source-Elektrode an den Emitter und dessen Gate-Elektrode an den Kollektor des Komparators der zweiten Schaltung angeschlossen ist. Vorzugsweise ist der Schalter der zweiten Teilschaltung dabei in p-Kanal-Ausführung ausgeführt. Dies ist bei einer Anwendung der Schaltungsanordnung in einem Spannungsversorgungspfad vorteilhaft. Alternativ kann der Schalter der zweiten Teilschaltung in n-Kanal-Ausführung ausgeführt sein, was bei einer Anwendung der Schaltungsanordnung in einem Sensorpfad vorteilhaft ist.

Es ist bevorzugt, dass die die Gateanschlüsse der Schalter der ersten und zweiten Teilschaltung jeweils Anschlussmöglichkeiten zum Einbringen von Hilfsspannungen aufweisen. Dies ist besonders bei einer Anwendung der Schaltungsanordnung in einem Sensorpfad vorteilhaft.

Nach einer bevorzugten Ausführungsform ist die Spannungsquelle als Kraftfahrzeugbatterie und die elektronische Baugruppe als Steuergerät oder die Spannungsquelle als Steuergerät und die elektronische Baugruppe als Sensor ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele,

die im Zusammenhang mit den Zeichnungen näher erläutert werden.

Die Schaltungsanordnung mit der Teilschaltung gegen positive Überspannung für den Spannungsversorgungspfad, als Blockdarstellung abgebildet in Fig. 4, basiert grundsätzlich auf einem elektronisch steuerbaren Schalter 43 bzw. Schaltelement, das in Reihe zur versorgenden, bzw. zu schützenden Last, bzw. elektronischen Baugruppe 4 geschaltet ist. Das Schaltelement kann hier als selbstleitend betrachtet werden, d.h. im nicht angesteuerten Zustand ist der Schalter 43 geschlossen, also leitend. Durch die Reihenschaltung wird auf einfache Weise das Problem des Entstehens großer Verlustleistung im Überspannungsfall umgangen, das parallel zur Last geschaltete Begrenzer- Klemmschaltungen gemäß des eingangs beschriebenen Stands der Technik stets aufweisen.

Der Wirkmechanismus der Teil-Schutzeinrichtung soll anhand zweier Betriebsfälle separat betrachtet werden:

a) Die elektronische Baugruppe wird im regulären Spannungsversorgungsbereich betrieben:
Im regulären Betriebsspannungsbereich stellt Spannungsquelle 1 die Versorgungsspannung für die elektronische Baugruppe bereit. Der elektronische Schalter 43 ist in diesem Betriebsfall nicht angesteuert und damit geschlossen (d.h. leitfähig) und die EB 4, wieder repräsentiert durch eine Konstantstromsenke, wird regulär mit Spannung versorgt. Dass der elektronische Schalter 43 geschlossen ist, wird sowohl von dem als Spannungsvergleicher geschalteten Komparator 42 als auch dessen Vergleichsspannungsquelle UCOMP bestimmt. In diesem Fall ist UCOMP so bemessen, dass sie größer ausfällt als die größte zugelassene Spannung innerhalb des regulären Versorgungsspannungsbereichs. Dadurch ist sichergestellt, dass das Vergleichsniveau des Komparators 42 nicht überschritten und der elektronische Schalter 43 im gesamten zugelassenen Versorgungsspannungsbereich nicht angesteuert wird und damit leitfähig bleibt.

b) Die elektronische Baugruppe wird mit positiver Überspannung betrieben:
An die EB 4 wird ausgehend von Spannungsquelle 1 positive Überspannung zugeführt in dessen Folge der elektronische Schalter 43 öffnet. Dies wird initiiert durch den Komparator 42 dessen Vergleichsspannung so bemessen ist, dass sie stets kleiner bzw. negativer als die positive Überspannung ausfällt wodurch der Komparator den elektronischen Schalter 43 ansteuert und dieser damit öffnet. Hiermit ist die Last, bzw. die elektronische Baugruppe 4 ab- bzw. freigeschaltet und somit vor der positiven Überspannung geschützt, ohne dass große Energien umgesetzt worden sind. Das Schaltungsprinzip setzt keinerlei zeitliche Grenzen bzgl. der Dauer der anstehenden positiven Überspannung.

An die Eigenschaften des elektronischen Serienschalters 43 in Fig. 4 werden hohe Anforderungen gestellt, da dieser als ein in Reihe zur Last geschaltetes Glied die Eigenschaften der Schutzeinrichtung in sämtlichen Betriebsfällen (d.h. Überlast und Normalbetrieb) und damit auch die Auswirkungen auf die zu schützende Last entscheidend mitbestimmt. Im Grunde genommen sind diese Anforderungen bereits in der Einleitung formuliert worden. Zusammengefasst lauten diese:
Der elektronische Serienschalter 43 soll einen nur vernachlässigbar kleinen EIN-Widerstand aufweisen, damit stromproportionale Spannungsfälle soweit wie möglich vermieden werden. Spannungsversatz, z.B. durch Halbleiter-Sättigungseffekte oder p-n Übergänge (Diode) dürfen nicht auftreten. Der elektronischen Serienschalter 43 soll ohne äußere Energiezufuhr (stromlos) den leitenden (EIN-) Zustand einnehmen und zumindest statisch selbsttätig halten können. Diese Eigenschaft liefert den Beitrag des elektronischen Serienschalters zur Anforderung, dass im regulären Betrieb die Schutzeinrichtung als Ganzes keinen Strom aus dem zu schützenden Spannungspfad aufnehmen soll.

Als ein von der Industrie angebotenes diskretes Standardbauelement, dass sämtliche oben genannten Anforderungen auf fast ideale Weise erfüllt, kann der sogenannte Isolierschicht- Feldeffekt Transistor, IG-FET, als Anreicherungstyp (selbstsperrend) angesehen werden. Dieser Transistortyp bietet darüber hinaus noch eine vergleichsweise einfache Ansteuerung zum Auslösen des Schaltvorgangs und erfordert damit wenig periphere Bauelemente um die Schutzschaltung und ihre Funktion darzustellen. Der IG-FET (selbstsperrend) soll daher in den nachfolgend schrittweise als Ausführungsbeispiele konkretisierten Schaltungen in seinen beiden Ausführungsformen - als p-Kanal oder als n-Kanal Transistor - ausschließlich verwendet werden. Gleichwohl sei bemerkt, dass die Verwendung nur beispielhaft erfolgt und auch andere Halbleiterschalter mit ähnlichen Eigenschaften Anwendung finden können.

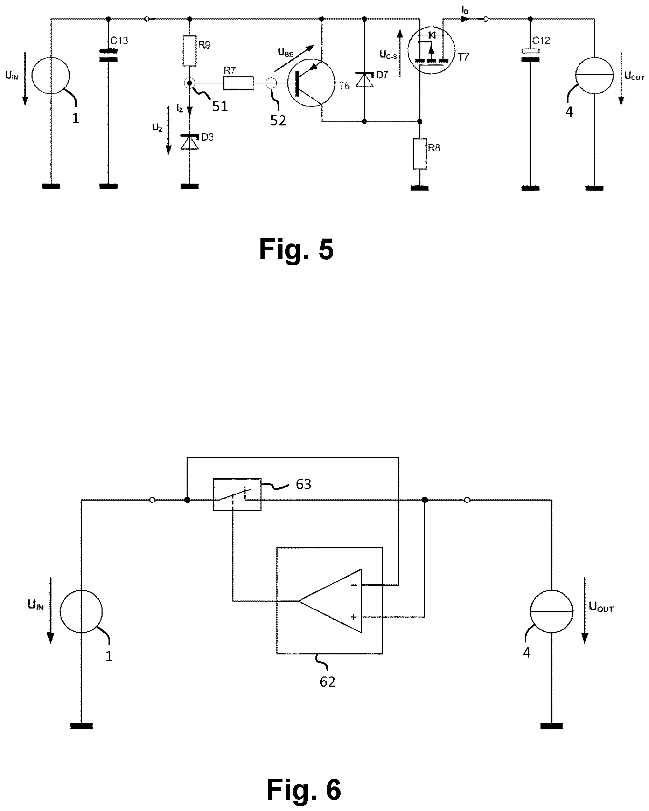

Basierend auf der Blockdarstellung in Fig. 4 ist mit Fig. 5 eine erste Teilschaltung dargestellt, mit der die Funktion "Schutz einer elektronischen Baugruppe durch Freischalten der Quelle im Falle positiver Überspannung" in eine Real-Schaltung überführt wurde. Hierbei übernimmt in Fig. 5 der IG-FET in p-Kanal Ausführung, T7, die Aufgabe des elektronischen Serienschalters dessen Source-Elektrode von der Versorgungsspannungsquelle U_IN gespeist wird, die der Spannungsquelle 1 entspricht. Die Last, bzw. die zu schützende elektronische Baugruppe 4 wird von der Drain-Elektrode T7 gespeist und ist wieder durch eine Konstantstromsenke repräsentiert, an der die gegen positive Überspannung geschützte Spannung U_OUT anliegt. Die Gate-Elektrode von T7 ist über einen Vorwiderstand R8 auf Massepotential festgelegt.

Werden zunächst die Peripheriekomponenten vernachlässigt, so ist erkennbar, dass durch Auswahl eines p-Kanal IG-FET und Bezug der Gate-Elektrode auf Massepotenzial nach Übersteigen der Gate-Source Schwellspannung ein automatisches Einschalten von T7 erfolgt (die Drain-Source Strecke von T7 wird niederohmig), da die Gate- Elektrode von T7 hinreichend negativer ist, als dessen Source- Elektrode (UG-S in Fig. 5 ist negativ). Durch entsprechende Anordnung der Source- und Drain-Elektrode von T7 in Bezug auf die Spannungen U_IN und U_OUT mit sich daraus ergebender Polarisierung der Substratdiode von T7 wird erreicht, dass diese für positive Spannungen U_IN nichtleitend geschaltet ist und T7 durch entsprechende Ansteuerung daher abschaltbar bleibt (im umgekehrten Fall wäre die Diode von T7 dauerhaft leitend gepolt und ein Abschalten von T7 bei positiven Überspannungen wäre unmöglich). Mit dem bipolaren pnp-Transistor T6 mitsamt der zugehörigen Widerstände R7 und R9 wird ein sehr einfacher, technisch ausreichender jedoch aus ökonomischer Sicht vorteilhafter Spannungskomparator aufgebaut. Widerstand R7 sorgt in erster Linie für die Begrenzung des Basisstroms von T6. Zusammen mit R9 bestimmen beide Widerstände den Strom durch die Z-Diode D6, welche hier die Vergleichsspannungsquelle für den Komparator T6 darstellt. Das Überspannungsabschaltniveau AN von T6 und damit auch von T7 wird bestimmt von der frei wählbaren Z-Spannung der Diode D6 sowie der Vorwärtsspannung der Basis-Emitterdiode des Komparatortransistors T6. Es gilt näherungsweise:

$$AN \approx U_Z + U_{BE}.$$

Die Hauptaufgabe von Ableitwiderstand R9 ist es, Basis-Restströme des Transistors T6 abzuführen und somit dafür zu sorgen, dass T6 nicht fälschlicherweise aktiviert wird, sofern keine positive Überspannung UIN ansteht. Hier ist es bedeutsam zu erwähnen, dass R9 grundsätzlich wahlweise an den beiden Knoten 51 oder 52 in Fig. 5 angeschlossen werden kann, um seine Funktion auszuüben. Der gewählte Knoten 51 bietet jedoch Vorteile: Der Widerstandswert kann, ohne nachteiligen Effekt, ähnlich oder gleich niederohmig wie die anderen in der Schaltung befindlichen Widerstände bemessen werden, ohne dass der wirksame Stromverstärkungsfaktor des Transistors T6 vermindert wird. Durch gleiche Widerstandswerte ergeben sich Vorteile in Bezug auf die Stückliste der Schaltung und man erhält die Möglichkeit die Widerstände physisch zusammenzufassen, so dass z.B. mit einem Widerstandsarray nur ein Bauelement bestückt werden muss anstelle von dreien (R7; R8 und R9 werden in einem Bauelement örtlich zusammengefasst). Demgegenüber müsste der Ableitwiderstand R9, angeknüpft an Knoten 52, deutlich hochohmiger ausgeführt werden, sofern die wirksame Stromverstärkung von T6 nur unwesentlich vermindert werden soll. Eine ausreichend große wirksame Stromverstärkung von T6 ist notwendig um auch bei für D6 eingesetzten Z-Dioden mit flach verlaufender Kennlinie einen scharfen und definierten Überspannungsabschaltpunkt zu erhalten. Flach verlaufende Kennlinien sind häufig bei höheren Z-Spannungen anzutreffen. Das Zusammenspiel aller oben genannten Bauelemente und wie diese die Schutzfunktion bereitstellen, wird aus nachfolgenden Wirkketten ersichtlich, bezogen auf Fig. 5:

a) Die elektronische Baugruppe wird im regulären Spannungsversorgungsbereich betrieben:
Bei einer Betriebsspannung U_IN innerhalb des regulären Versorgungsspannungsbereichs ist U_IN kleiner als das mit $AN \approx U_Z + U_{BE}$ definierte Abschaltniveau. Somit kann wegen der gesperrten Diode D6 (es fließt kein Strom durch D6) auch kein Basisstrom durch T6 fließen (die Basis von T6 liegt über R9 auf Emitterpotenzial), so dass infolgedessen auch die Kollektor-Emitter Strecke von T6 gesperrt ist. Damit bildet sich an T7 eine negative Spannung UG-S aus: T7 ist eingeschaltet und reicht die Betriebsspannung UIN an die elektronische Baugruppe weiter (UOUT), die damit voll betriebsbereit ist. Abgesehen von vernachlässigbaren Halbleiter-Restströmen fließt in den Schutzschaltungsteil kein Betriebsstrom hinein.

b) Die elektronische Baugruppe wird mit positiver Überspannung betrieben:
Mit Ansteigen der Betriebsspannung UIN stellt sich zunächst mit Überschreiten der Z-Spannung an D6 ein konstantes Spannungsniveau ein (UZ= const.). Das weitere Ansteigen von UIN um UBE bewirkt, dass nun die Basis- Emitter Schwellspannung von T6 überschritten wird (UZ= const.; UIN≈ UZ+ UBE). Der nun einsetzende Basisstrom (T6) bewirkt einen entsprechenden Kollektorstrom, d.h. die Kollektor-Emitterstrecke von T6 schaltet (niederohmig) durch. R8 begrenzt den entstehenden Kollektorstrom auf für den Transistor ungefährliche Werte. Die Folge des Durchschaltens von T6 ist nun schließlich, dass die Steuerspannung UG-S von T7 auf nahezu Null Volt reduziert wird, woraufhin dieser öffnet und die elektronische Baugruppe, bzw. UOUT abschaltet: Die elektronische Baugruppe ist damit vor der anliegenden positiven Überspannung U_IN sicher geschützt.

In der Schaltung in Fig. 5 sind noch weitere, bisher ungenannte Bauelemente abgebildet, die eher eine untergeordnete Bedeutung für die Funktion der Schaltung einnehmen. Es sind dies:

C13: EMV oder ESD Kondensator, der in Automotive Produkten üblicherweise im unmittelbaren Eingang einer Schaltung angeordnet ist. Er ist nur der Vollständigkeit halber aufgeführt.

C12: Lade- oder Filterkondensator. Dieser dient als Pufferkondensator und beseitigt kurze Spannungseinbrüche auf der Versorgungsspannungsleitung. Er hat jedoch mit der gezeigten Schutzschaltung unmittelbar nichts zu tun.

D7: Die Z- Diode begrenzt die maximale UG-S Spannung auf einen für T7 zugelassenen Wert. Sie kann entfallen, wenn die maximale UG-S Spannung von T7 über dem Abschaltniveau liegt, da dann T6 bereits bei niedrigeren Eingangsspannungen UG-S im Rahmen des Überspannungsschutzes zu 0 V kurzschließt.

Für eine mögliche zweite Teilschaltung der Schaltungsanordnung, welche die elektronische Baugruppe 4 vor negativen Überspannungen schützt, lässt sich mit Fig. 6 zunächst analog zu Fig. 4 eine Prinzipschaltung darstellen. Wie in Fig. 6 skizziert, kann eine solche Teil- Schutzeinrichtung ebenfalls auf einem elektronisch steuerbaren Schalter 63, der wiederum in Reihe zur versorgenden, bzw. zu schützenden Last geschaltet ist basieren. Der Schalter 63 kann als selbstleitend betrachtet werden, d.h. im nicht angesteuerten Zustand ist der Schalter 63 geschlossen (leitend). Die geforderten Eigenschaften an den Schalter sind zu den in Zusammenhang mit Fig. 4 geschilderten identisch. Auch in diesem Schutzschaltungsteil wird durch Anwendung der Reihenschaltung von Quelle und Schaltelement auf einfache Weise das Problem des Entstehens großer Verlustleistung im Überspannungsfall umgangen, das parallel zur Last geschaltete Begrenzer- Klemmschaltungen stets aufweisen. Der wesentliche Unterschied im Vergleich zur ersten Teilschaltung aus Fig. 4 bzw. Fig. 5 ist in der Verschaltung des Komparators 62 zu sehen. Dessen Wirkmechanismus soll wieder anhand zweier Betriebsfälle separat betrachtet werden:

a) Die elektronische Baugruppe wird im regulären Spannungsversorgungsbereich betrieben:
Im regulären Betriebsspannungsbereich stellt Spannungsquelle 1 die Versorgungsspannung für die elektronische Baugruppe bereit. Der elektronische Schalter 63 ist in diesem Betriebsfall nicht angesteuert und damit geschlossen (d.h. leitfähig) und die EB 4, repräsentiert durch eine Konstantstromsenke, wird regulär mit Spannung versorgt. Dass der elektronische Schalter 63 geschlossen ist, wird von dem als Spannungsvergleicher geschalteten Komparator 62 bestimmt, der den elektronischen Schalter 63 stets dann nicht ansteuert, sofern die Spannungsdifferenz zwischen nichtinvertierendem Eingang und invertierendem Eingang des Komparators 62 positiv ist. In diesem Betriebszustand mit positiver (bzgl. Massepotenzial) Eingangsspannung, ist der elektronische Schalter 63 demnach stets geschlossen (leitend) und die elektronische Baugruppe damit normal betriebsfähig.

b) Die elektronische Baugruppe wird mit negativer (Über)-spannung betrieben:
An die EB 4 wird ausgehend von Spannungsquelle 1 negative Überspannung zugeführt in dessen Folge der elektronische Schalter 63 öffnet. Als negative Überspannung werden Potenziale angesehen, die kleiner als 0 V bzgl. Massepotenzial ausfallen. Das Öffnen des Schalters 63 wird wieder initiiert durch den Komparator 62 dessen Spannungsdifferenz zwischen nichtinvertierendem Eingang und invertierendem Eingang des Komparators 62 nun negativ geworden ist wodurch der Komparator den elektronischen Schalter 63 ansteuert und dieser damit öffnet. Hiermit ist die Last, bzw. die elektronische Baugruppe 4 ab- bzw. freigeschaltet und somit vor der negativen Überspannung geschützt, ohne dass große Energien umgesetzt worden sind. Das Schaltungsprinzip setzt auch in diesem Betriebsfall keinerlei zeitliche Grenzen bzgl. der Dauer der anstehenden negativen Überspannung.

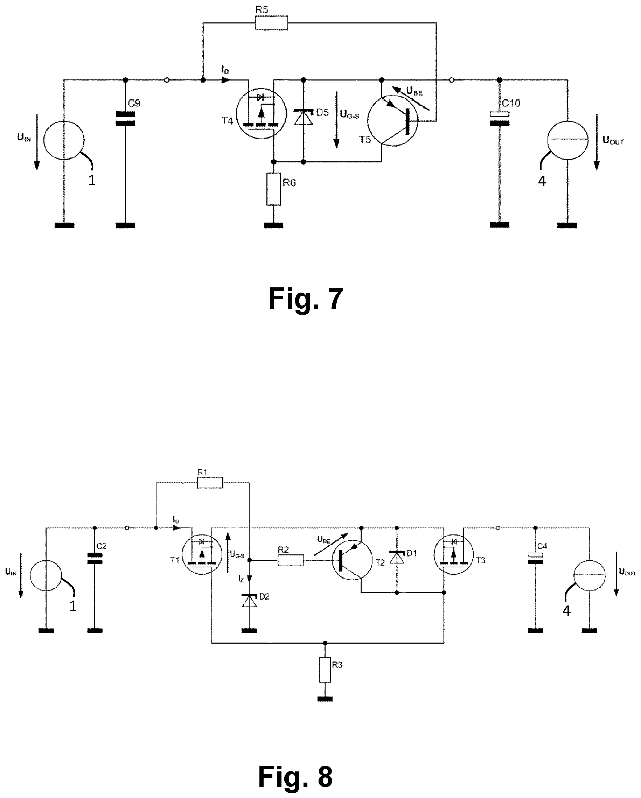

Basierend auf der Blockdarstellung in Fig. 6 ist auch hier eine zweite Teilschaltung als Ausführungsbeispiel in Fig. 7 dargestellt, mit der die Funktion "Schutz einer elektronischen Baugruppe durch Freischalten der Quelle im Falle negativer Überspannung" in eine konkrete Schaltung überführt wurde:
Hierbei übernimmt in Fig. 7 wiederum der IG-FET in p-Kanal Ausführung, T4, die Aufgabe des elektronischen Serienschalters, wobei nun dessen Drain-Elektrode von der Versorgungsspannungsquelle (U_IN) gespeist wird. Die Last, bzw. die zu schützende elektronische Baugruppe wird von der Source-Elektrode von T4 gespeist und ist wieder durch eine Konstantstromsenke repräsentiert, an der die gegen negative Überspannung geschützte Spannung U_OUT anliegt. Die Gate-Elektrode von T4 ist über einen Vorwiderstand R6 auf Massepotenzial festgelegt. Werden auch hier zunächst die Peripheriekomponenten vernachlässigt, so ist erkennbar, dass durch Auswahl eines p-Kanal IG-FET und Bezug der Gate-Elektrode auf Massepotenzial nach Übersteigen der Gate-Source Schwellspannung für positive Spannungen U_IN ein automatisches Einschalten von T4 erfolgt (die Drain-Source Strecke von T4 wird niederohmig), da die Gate-Elektrode von T4 hinreichend negativer ist als dessen Source- Elektrode (UG-S in Fig. 7 ist negativ). Möglich macht dies die für positive Eingangsspannungen U_IN entsprechend gepolte Substratdiode von T4, welche mit ansteigender positiv werdender Spannung U_IN zunächst als leitende Diode die Source-Elektrode von T4 mit positivem Potenzial vorspannt bis dann im weiteren Verlauf des Anstiegs der Spannung U_IN die UG-S Schwellspannung von T4 überschritten wird, so dass der nun niederohmig gewordene parallel zur Substratdiode geschaltete Drain-Source Kanal von T4, die Substratdiode überbrückend kurzschließt und praktisch die vollständige Spannung U_IN als U_OUT an der elektronischen Baugruppe erscheint: Die elektronische Baugruppe ist somit für positive Spannungen U_IN selbsttätig eingeschaltet. Die Polung der Substratdiode, bzw. die Anordnung der Source- und Drain-Elektrode von T4 in Bezug auf die Spannungen U_IN und U_OUT sorgt in diesem Zusammenhang nicht nur für ein sicheres Einschalten der zu schützenden Baugruppe bei positiven Eingangsspannungen, sondern ermöglicht es insbesondere auch, den Transistor T4 für negative Eingangsspannungen U_IN durch entsprechende Ansteuerung zu sperren. Dies ist möglich, weil die Substratdiode für negative Eingangsspannungen ebenfalls gesperrt ist. Mit dem bipolaren pnp-Transistor T5 und dem zugehörigen, basistrombegrenzenden Vorwiderstand R5 wird wieder ein sehr einfacher und demnach kostengünstiger Spannungskomparator aufgebaut.

Die Hauptaufgabe von T5 besteht darin, negative Potenzialdifferenzen zwischen seiner Basis, angeschlossen an UIN und seinem Emitter, der an U_OUT angeschlossen ist zu erfassen. Bei einer negativen Potentialdifferenz zwischen U_IN und U_OUT stellt sich mit Überschreiten der Basis-Emitter Schwellspannung von T5 ein entsprechender Basisstrom ein, dem ein entsprechender Kollektorstrom ausgangsseitig folgt. Der zunächst noch wegen des negativen UG-S Potenzials leitende IG-FET T4 wird in der Folge durch die nun durch T5 kurzgeschlossene Gate- und Source-Elektrode abgeschnürt. Damit ist die elektronische Baugruppe bei einem negativen Potenzialgefälle zwischen UIN und UOUT frei- bzw. abgeschaltet und damit vor negativen Überspannungen geschützt. Grundsätzlich erscheint es zunächst, als sei der Komparatortransistor T5 und Basiswiderstand R5 in der Schaltung von Fig. 7 unnötig vorgesehen, da der verwendete p-Kanal IG-FET, T4, vom Anreicherungstyp für UG-S= 0 V und für positive Werte von UG-S von sich aus und ohne separates Kontrollorgan gesperrt wird. Obwohl dieses Verhalten des IG-FET, T4, in vielen Fällen richtig und ausreichend ist, um die Schutzfunktion gegen negative Überspannungen darzustellen, so gibt es doch bestimmte und nicht ganz praxisferne Situationen in denen der Komparatortransistor T5 für die Betriebssicherheit der Schutzschaltung höchste Bedeutung erlangt. Dies ist z.B. in elektronischen Baugruppen der Fall, die über besonders hochkapazitive Kondensatoren, allgemein als Puffer oder als überbrückender Energiespeicher bei Spannungseinbrüchen verwendet, im Eingang verfügen. Die Schaltung in Fig. 7 stellt mit C10 ein solches Bauelement dar.

Nachfolgend soll anhand zweier Beispiele das Verhalten der Schaltung in Fig. 7 untersucht werden, wenn der (hochkapazitive) Kondensator C10 vollständig aufgeladen ist, und es eingangsseitig zu einem Kurzschluss zwischen der potenzialführenden Leitung U_IN und dem Masseanschluss kommt (U_IN wird kurzgeschlossen). Eine solche Situation entsteht in der Praxis u.a., wenn die Einzeladern in einem Kabelbaum verletzt werden und sich schließlich abrupt verbinden, bzw. kurzschließen. Die versorgende Quelle (U_IN) bleibt in einem solchen Fall zumeist unversehrt, da diese üblicherweise mit einer Überstromsicherung versehen ist. Bei den Auswirkungen auf die Schutzeinrichtung für negative Überspannung muss unterschieden werden, ob die Schaltung vollständig ausgeführt ist, d.h. wie in Fig. 7 dargestellt, oder ob T5 und R5 entfernt worden sind:

a) Aus der Schaltung in Fig. 7 sei gedanklich T5 und R5 entfernt worden. Mit dem abrupten Kurzschließen der Eingangsspannung UIN bei vollständig geladenem Kondensator C10 kommt es, mit der gespeicherten Energie in C10, zu einem Stromfluss aus C10 über den geschlossenen Drain-Source Kanal von T5 in die kurzgeschlossene Eingangsspannungsquelle. Dieser Stromfluss über T5 ist möglich, weil im Augenblick des Kurzschlusses die Source-Elektrode von T5 durch den geladenen Kondensator C10 mit positivem Potenzial vorgespannt ist (UG-S ist negativ!) und der Transistor T5 somit zunächst in vollständig leitendem Zustand verbleibt, während der Drain-Source Kanal vom Strom in umgekehrter Stromflussrichtung als im Regelbetrieb durchflossen wird. Dieser Zustand bleibt so lange erhalten bis Kondensator C10 sich soweit entladen hat, dass dessen Restspannung unter die UG-S Schwellspannung fällt und der Drain-Source Kanal von T4 in dessen Folge gesperrt wird. Problematisch an der entstandenen Situation ist die Größe des sich ergebenen (Kurzschluss-) Stromes. Dieser wird, wenn davon ausgegangen wird, dass der Kurzschluss unmittelbar im Eingangsbereich der Schutzeinrichtung entsteht, im Wesentlichen nur von den (kurzen) stromführenden Leiterbahnen und dem EIN-Widerstand des Drain-Source Kanals des Transistors T5 begrenzt. Der Kurzschlussstrom fällt daher sehr groß aus, mit der Folge, dass dieser den maximal zulässigen Drain- Strom des Transistors T4 um einige Größenordnungen übersteigt, wodurch T4 in den Defektzustand übergeht. Im Besonderen problematisch ist hierbei, dass Defekte infolge von Überstrom bei IG-FET Transistoren sich vielfach in einem dauerhaften Kurzschluss des Drain-Source Kanals äußern, der Defekt also als latenter Fehler in Erscheinung tritt, da T4 zu keiner Funktionseinschränkung der elektronischen Baugruppe führt, diese jedoch im Falle negativer Überspannung auch nicht mehr geschützt ist, da der defekte Transistor T4 nicht mehr steuerbar ist. In elektronischen Baugruppen für hochsichere Anwendung können bei diesem auftretenden latenten Fehler die sogenannten Fehler gemeinsamen Ursprungs ("common cause failure") nicht mehr abgewendet werden, wodurch das Sicherheitsziel infrage gestellt ist.

b) Die Schaltung ist gemäß Fig. 7 vollständig ausgeführt. Ein Wirkmechanismus wie unter a) skizziert mit den unerfreulichen Folgeerscheinungen kann vermieden werden indem in Fig. 7 der Komparatortransistor T5 und Basiswiderstand R5 verschaltet werden. Speziell für die in a) geschilderte Situation - durch den eingangsseitigen Kurzschluss negatives Potenzial an der Basis von T5 bei gleichzeitig positiverem Potenzial am Emitter von T5, bzw. Source von T4 - kann T5 seine Aufgabe erfüllen und durch Vergleich von Basispotenzial zu Emitterpotenzial bei sich einstellendem Basisstrom den IG FET T4 sperren, indem das Gatepotenzial von T4 gleich dem Sourcepotenzial gemacht wird (UG-S= 0 V). Damit wird ein übermäßiger Stromfluss mit inverser Stromrichtung sicher vermieden und der Transistor T4 ist in nun allen Betriebszuständen vor Zerstörung geschützt. Sobald das Emitterpotenzial auf nahezu 0 V (Massepotenzial) abgesunken ist (C10 ist vollständig entladen), kann T5 seine potenzialvergleichende Aufgabe nicht mehr erfüllen. Sofern das Eingangspotenzial U_IN in dieser Situation noch 0 V oder ein negativeres Potenzial aufweist, schnürt sich Transistor T4 selbst ab und ist für jegliche negative Überspannung sicher gesperrt und die elektronische Baugruppe entsprechend geschützt.

Wie zuvor sei auch hier noch kurz auf die in der Schaltung der Fig. 7 enthaltenen, jedoch bisher ungenannten Bauelemente eingegangen. Es sind dies:

C9: Ein EMV oder ESD Kondensator, der in Automotive Produkten üblicherweise im unmittelbaren Eingang einer Schaltung angeordnet ist. Er ist nur der Vollständigkeit halber aufgeführt.

D5: Die Z- Diode begrenzt die maximale positive UG-S Spannung auf einen für T4 zugelassenen Wert. Sie kann entfallen, wenn die maximale Eingangsspannung U_IN zur Versorgung der elektronischen Baugruppe kleiner ausfällt als die zulässige UG-S Spannung von T4.

Mit den in Zusammenhang mit den Figuren 4, 5, 6 und 7 vorgestellten Teilschaltungen, die zwar beide für sich ihre Teil- Schutzfunktion vollumfänglich erfüllt haben, jedoch nicht in der Lage waren gegen beide Störgrößen - positive und negative Überspannung - zu schützen, soll nachfolgend entsprechend eines Ausführungsbeispiels einer bevorzugten Ausführungsform der Erfindung eine Verbundschaltung dargestellt werden, die beide Teilaufgaben gleichermaßen und ohne Einschränkung erfüllen kann.

Da beide bisherigen Teilschaltungen auf dem Frei- bzw. Abschalten der zu schützenden elektronischen Baugruppe mit jeweils einem elektronischen Serienschalter beruhten, soll die nachfolgende Verbundschaltung in konsequenter Weise beide Schutzfunktionen derartig miteinander verknüpfen, indem beide bisherigen Teilschaltungen in Serie, also hintereinander geschaltet werden. Dadurch bleiben die Vorteile, die beide bisherigen Teilschaltungen auszeichnete in vollem Umfang erhalten. Mit der in Fig. 8 dargestellten abschließenden Verbundschaltung wurde versucht mehrere Funktionen in einem Bauelement zu vereinen, um die gesamte Anzahl an notwendigen Bauelementen in Relation zu der Summe an Bauelementen für beide Teilschaltungen zu verringern und dadurch eine kostengünstigere Gesamtschaltung zu erhalten. Im Einzelnen können folgende Bauelemente entfallen, bzw. zusammengefasst werden: Die Gate- Elektroden der Transistoren T1 und T3 konnten zusammen verknüpft werden, so dass nur noch ein Gate- Widerstand R3 (anstatt zwei) vonnöten ist. Somit wird ein Widerstand eingespart.

Die Komparatorfunktion konnte bei positiver und negativer Überspannung in einem Transistorbauelement T2 zusammengefasst werden. Auch der Basiswiderstand R2 ist nur einmal notwendig. Somit wird ein Bipolar-Transistor und ein Widerstand eingespart.

Dadurch, dass neben den Gate- Elektroden auch die beiden Source- Elektroden von T1 und T3 zusammengeknüpft sind, kann eine Z-Diode zur Begrenzung der Gate-Source Spannung entfallen, da beide IG-FET Transistoren das gleiche UG-S Potenzial erfahren. Die verbleibende Z-Diode D1 kann zudem wie bisher entfallen, wenn das positive Abschaltniveau (AN) kleiner als die maximal zulässige UG-S Spannung für beide IG-FET (T1 und T3) ist. Somit lässt sich eine Z-Diode einsparen.

Die finale Verbundschaltung in Fig. 8 ist im Wesentlichen aus den gleichen Elementen wie die Einzelschaltungen der Fig. 5 und Fig. 7 aufgebaut, d.h. die beiden elektronischen Serienschalter T1 für das Abschalten bei negativer Überspannung und T3 für das Abschalten bei positiver Überspannung sind mit dem p-Kanal IG-FET untereinander und zu den jeweiligen Teilschaltungen identisch. Ihre Funktion wurde in Zusammenhang mit Fig. 4 und 5 für Transistor T3 und in Zusammenhang mit Fig. 6 und 7 für Transistor T1 bereits ausführlich dargestellt. Abgewandelt und reduziert auf ein Bauelement übernimmt der Transistor T2 des Komparators an dieser Stelle eine Doppelfunktion. Hier muss unterschieden werden in welchem Schutzzustand sich die Schaltung gerade befindet:

a) In regulärem Betriebsspannungsbereich U_IN sind beide IG-FET Transistoren T1 und T3 selbständig leitfähig, da die für beide Transistoren wirksame Gate-Source Spannung UG-S ausreichend negativ ist. Dass beide Transistoren ein ausreichend positives Source- Potenzial zugeführt bekommen ist der Substratdiode in T1 zu verdanken, die für positive Quellspannungen UIN in Durchlassrichtung gepolt ist. Mit Überschreiten der Gate-Source Schwellspannung wird die Substratdiode in T1 von dem nun leitenden Source-Drain Kanal überbrückt und T1 sowie T3 reichen die Betriebsspannung UIN an die elektronische Baugruppe weiter (U_OUT), die damit voll betriebsbereit ist. Dass der Ableitwiderstand R1 nicht mehr am Emitter von T2 sondern direkt an der Eingangsspannungsquelle UIN angeschlossen ist, schränkt dessen Aufgabe in diesem Betriebszustand, nämlich Basis-Restströme des Transistors T2 abzuführen und diesen sicher im gesperrten Zustand zu halten, nicht ein. Seine Funktion wird durch das tendenziell positivere Potenzial von UIN im Vergleich zum Emitterpotenzial von T2 sogar noch begünstigt. Abgesehen von vernachlässigbaren Halbleiter-Restströmen fließt in den Schutzschaltungsteil in diesem Betriebszustand kein Betriebsstrom hinein.

b) Bei ansteigend positiver Überspannung U_IN stellt sich zunächst äquivalent zu Fig. 5 mit Überschreiten der Z-Spannung an Z- Diode D2 ein konstantes Spannungsniveau ein (UZ= const.). Das weitere Ansteigen von U_IN um UBE bewirkt, dass nun die Basis- Emitter Schwellspannung von T2 überschritten wird (UZ= const.; UIN≈ UZ+ UBE). Der nun einsetzende Basisstrom (T2) bewirkt einen entsprechenden Kollektorstrom, d.h. die Kollektor-Emitterstrecke von T2 schaltet (niederohmig) durch. R3 begrenzt den entstehenden Kollektorstrom auf für den Transistor ungefährliche Werte. Die Folge des Durchschaltens von T2 ist nun schließlich, dass die Steuerspannung UG-S von T3 (und T1) auf nahezu Null Volt reduziert wird, woraufhin dieser öffnet und die elektronische Baugruppe, bzw. U_OUT abschaltet: Die elektronische Baugruppe ist damit vor der anliegenden positiven Überspannung U_IN sicher geschützt. Obwohl in dieser Situation positiver Überspannung auch T1 abgeschaltet wird, da die Gate-Source Anschlüsse beider Transistoren T1 und T3 parallel geschaltet sind, bleibt dieser vermindert leitfähig, da dessen Substratdiode so orientiert ist, dass diese für positive Eingangsspannungen stets leitfähig und somit das Vergleichsniveau für die Emitter-Elektrode von T2 erhalten bleibt.

c) Bei abrupt entstehendem Massekurzschluss oder einsetzender negativer Überspannung, bei zuvor aufgeladenem C4, tritt der in Zusammenhang mit Fig. 7 beschriebene Wirkmechanismus ein, d.h. das durch den eingangsseitigen Kurzschluss negativere Potenzial an der Basis von T2, abgegriffen durch Widerstand R1, bei gleichzeitig positiverem Potenzial am Emitter von T2, bzw. Source (T1; T3) führt dazu, dass mit dem sich nun einstellenden Basisstrom ein entsprechender Kollektorstrom entsteht (T2 wird leitend) woraufhin das Gate- und Source Potenzial von T1 und T3 potenzialgleich gemacht wird (UG-S= 0 V) und T1 in der Folge abgeschaltet ist. Ein invers fließender Kurzschlussstrom von C4 in die kurzgeschlossene Quelle wird somit sicher unterbunden.T3 kann aufgrund der Orientierung von dessen Substratdiode, die in dieser Situation stets leitend ist, nicht abgeschaltet werden. Dank der leitenden Substratdiode von T3 bleibt das Potenzial von C4 als Vergleichspotenzial für den Emitter des Komparatortransistors T2 erhalten, bis sich C4 über die elektronische Baugruppe vollständig entladen hat. Sofern in dieser Situation das Potenzial der Eingangsspannungsquelle U_IN noch 0 V oder negativ ist, sperrt sich T1 aufgrund des nun auf 0 V abgeklungenen Gate-Source Potenzials (UG-S= 0 V) und schützt die elektronische Baugruppe weiterhin, jedoch nun ohne Einfluss durch T2, vor jeglicher negativer Überspannung.

Die in Zusammenhang mit Fig. 8 erläuterte Schaltungsanordnung zum Schutz insbesondere gegen positive- und negative Überspannungen im Betriebsspannungspfad, soll im Folgenden anhand eines Praxisbeispiels näher untersucht werden. Hierzu werden im Zeitbereich verschiedene Spannungen und Ströme erfasst, die das in den vorangegangenen Abschnitten beschriebene Verhalten unter den verschiedenen Betriebszuständen widerspiegeln und noch besser verständlich machen sollen.

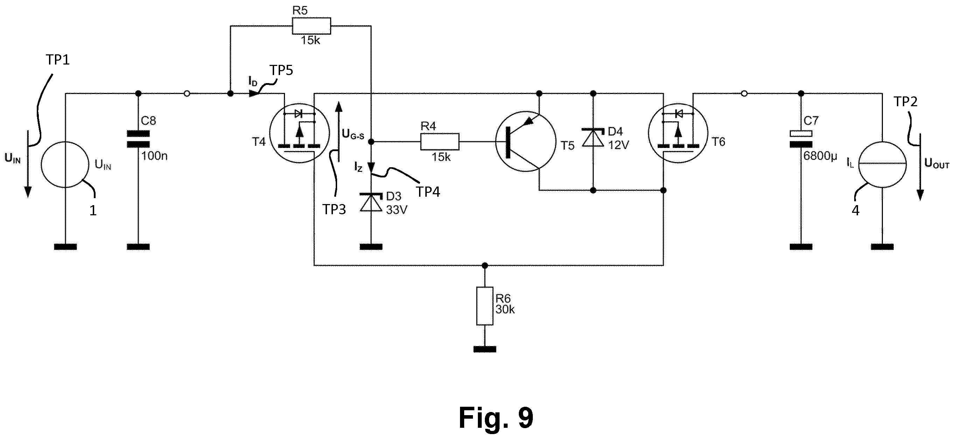

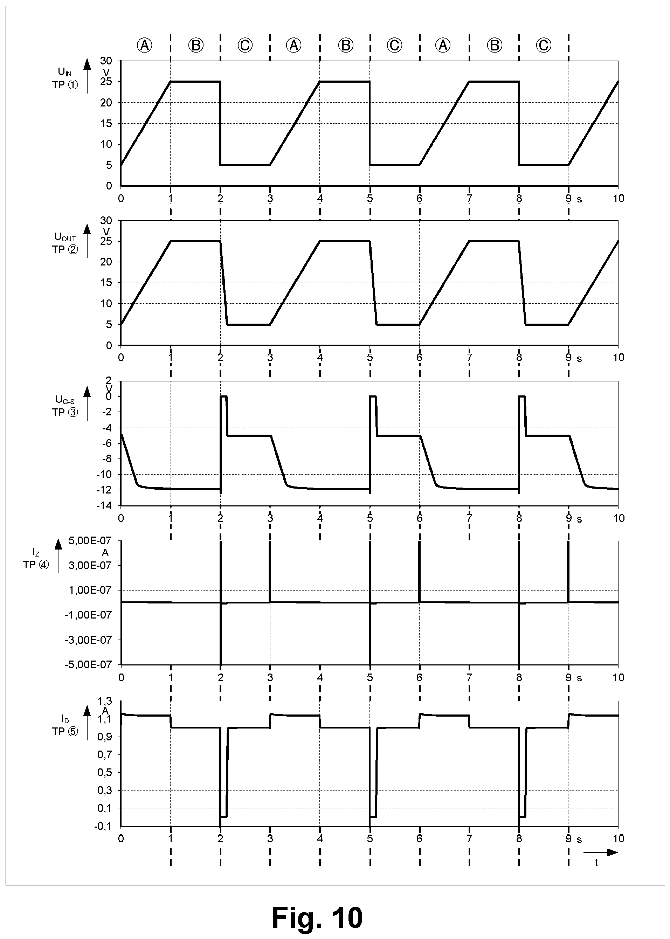

Als Basis dient die in Fig. 9 dargestellte, nun dimensionierte Schaltungsanordnung, die der bekannten Verbundschaltung aus Fig. 8 entspricht. Mit den Bezugszeichen TP1 bis TP5 soll jeweils auf das Signal (Spannung/Strom) verwiesen werden, das in der nachfolgenden in Fig. 10 dargestellten Auswertung abgebildet wird. Die abgebildete Schaltung ist auf folgende Kennwerte hin, beispielhaft, dimensioniert worden:

Es wird ein regulärer Eingangsspannungsbereich U_IN= 5 V - 32 V angesetzt. Hierbei wird die untere Grenze von der Gate-Source Schwellspannung der IG-FET Transistoren T4 und T6 bestimmt. Es

handelt sich also um einen transistorspezifischen Kennwert, während die obere Grenze vom gewählten Abschaltniveau AN für positive Überspannungen begrenzt ist.

Das Abschaltniveau AN für positive Überspannungen ergibt sich mit der Gleichung näherungsweise zu AN ≈ Uz + $U_{BE}$. Mit UZ= 33 V (wird von D3 festgelegt) und UBE= 0,7 V (wird vom Komparatortransistor T5 festgelegt) erhält man näherungsweise ein Abschaltniveau von AN≈ 33,7 V. Die UG-S Begrenzerdiode D4 trägt dem Umstand Rechnung, dass das UG-S Potenzial nicht über UG-S= 20 V ansteigen kann, denn bei diesem Potenzial liegt für T4 und T6 die Belastungsgrenze vor (Beispieldefinition, abhängig vom jeweiligen Transistor). D4 wird nur benötigt, weil in diesem Beispiel gilt: UG-S_max< AN.

Der Betriebsstrom der elektronischen Baugruppe soll 1 A betragen und konstant sein. Dieser wird in Fig. 9 durch die Konstantstromsenke IL symbolisiert. Der Pufferkondensator C7 ist mit c= 6800 μF bewusst hochkapazitiv ausgelegt worden, um mögliche Inversströme bei plötzlichem negativ- Potenzial U_IN erkennbar zu machen. Auftretende Inversströme stellen eine potenzielle Gefahr für T4 und T6 dar.

In der allgemeinen Dimensionierung der Bauelemente ist auch die ökonomische Komponente berücksichtigt worden. Während in Zusammenhang mit Fig. 8 mehrere Funktionen in einem Bauelement zusammengefasst wurden, ist die Dimensionierung hier so ausgeführt, dass die Bauelemente funktionell zwar noch vorhanden, jedoch physisch zusammenfassbar sind. Dies ist ein weiterer Schritt zur Minimierung der Anzahl der zu bestückenden Bauelemente auf der Leiterplatte, woraus sich eine vereinfachte Fertigung der Schutzeinrichtung ergibt. Folgende Bauelemente sind von dieser Maßnahme betroffen:

Die IG-FET T4 und T6 sind von ihren technischen Daten identisch. Diese können in einem Doppel-IG-FET zusammengefasst werden. Ein zu bestückender Transistor kann also eingespart werden.

Die in der Schutzschaltung benötigten Widerstände sind durchweg vom Nennwert her gleich groß dimensioniert, ohne dass die Eigenschaften der Schutzschaltung beeinträchtigt werden. Dies gilt auch für R6, wenn angenommen wird, dass sich sein Nennwert aus der Reihenschaltung zweier 15 kΩ Widerstände zusammensetzt. Gleiche Widerstandswerte ermöglichen ein Zusammenfassen aller Widerstände in einem 4-fach Widerstandsarray zu je 15 kΩ Nennwert. Zwei zu bestückende Widerstände können somit eingespart werden.

Zur weiteren Untersuchung der dimensionierten Verbundschaltung in Fig. 9 ist für die Eingangsspannung U_IN (d.h. das Signal an TP1) ein periodischer Zeitverlauf definiert worden, der sowohl einen rampenförmigen Anstieg, in Fig. 10 in Zeitabschnitt A verlaufend, einen konstanten Verlauf auf hohem (positivem) Spannungsniveau, in Fig. 10 in Zeitabschnitt B verlaufend, einen konstanten Verlauf auf niedrigem Spannungsniveau, in Fig. 10 in Zeitabschnitt C verlaufend, sowie einen Spannungssprung enthält. Hierbei sollen drei Betriebsfälle oder Spannungsbereiche für U_IN unterschieden werden:

5 V ≤ U_IN ≤ 25 V, d.h. U_IN befindet sich ausschließlich innerhalb des regulären Betriebsspannungsbereichs (Fig. 10).

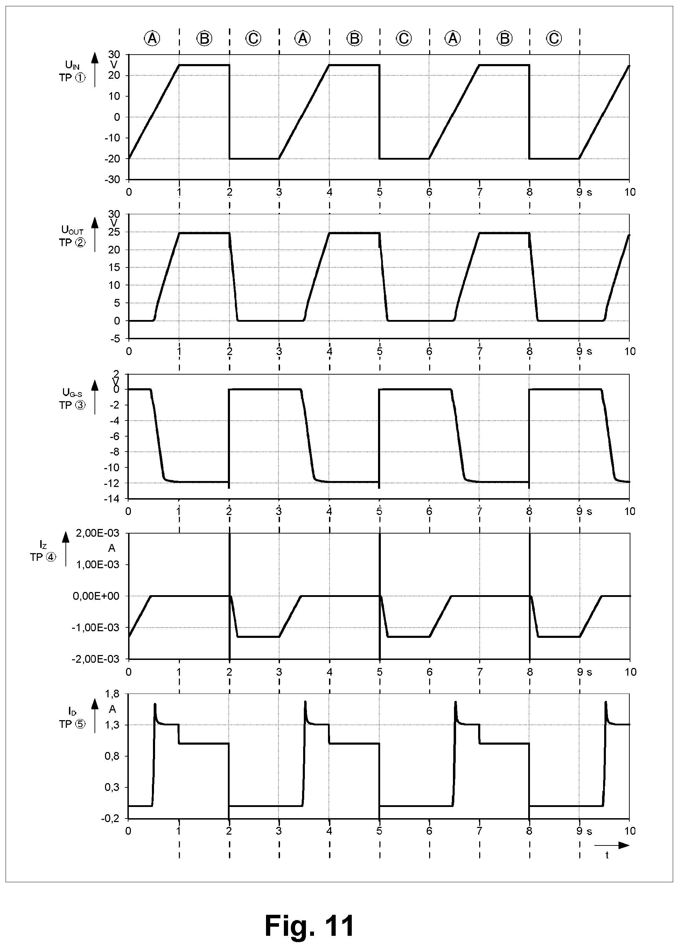

-20 V ≤ UIN ≤ 25 V, d.h. U_IN enthält negative Überspannung, führt jedoch keine positive Überspannung (Fig. 11).

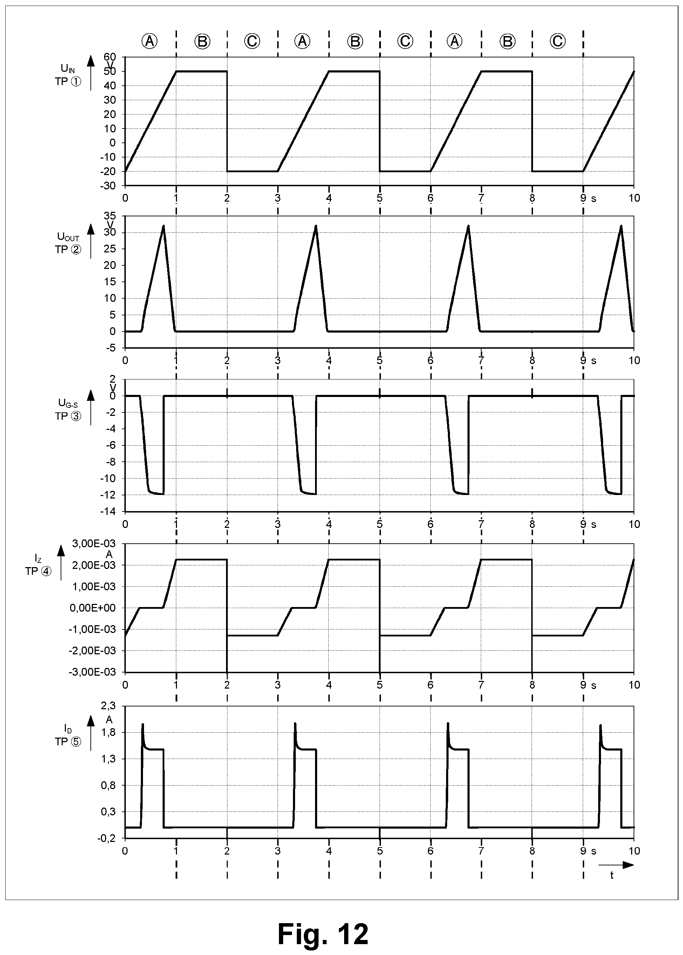

-20 V ≤ UIN ≤ 50 V, d.h. U_IN durchläuft die Spannungsbereiche negative Überspannung, regulärer Betriebsspannungsbereich sowie positive Überspannung (Fig. 12).

Mit den in Fig. 10 dargestellten Zeitverläufen befindet sich die Eingangsspannung U_IN, bzw. das Signal am TP1 stets innerhalb des hier definierten regulären Betriebsspannungs-bereichs. Die geschützte Ausgangsspannung darf demnach nicht so verändert werden, dass es zu einer Betriebsbeeinträchtigung der elektronischen Baugruppe kommt (TP2). Dies ist in den periodisch wiederkehrenden Zeitabschnitten A bis C gegeben. Bei genauerem Betrachten des Oszillogramms des TP2 ergeben sich dennoch Unterschiede zum Eingangssignal am TP1: Während in den Zeitabschnitten A und B die Spannungen TP1 zu TP2 noch nahezu gleich verlaufen, kommt es mit der steil fallenden Flanke im Übergang der Abschnitte B und C zu Veränderungen an TP2. Die Spannungsflanke verläuft deutlich flacher. Dies ist auf ein Abkoppeln (Trennen) mit der steil ins Negative fallenden Flanke an TP1 zurückzuführen, d.h. Kondensator C7 wird nicht über den Inversstrom durch die Eingangsspannungsquelle U_IN entladen, sondern über den deutlich kleineren Betriebsstrom (IL= 1 A) der elektronischen Baugruppe. Da dieser konstant ist, ergibt sich eine linear fallende Spannungsflanke an TP2 im Übergang der Abschnitte B und C. Dieses Verhalten ist beabsichtigt, verhindert es doch übergroße Invers-Kurzschlussströme und damit die Zerstörung der Transistoren T4 und T6. Initiiert wird dieses Verhalten vom Komparatortransistor T5, der dafür sorgt, dass zwischen Abschnitt B und C die Spannung UG-S= 0 V wird (TP3) und somit IG-FET T4 gesperrt ist. Die durch die Z-Diode D3 fließenden Ströme (TP4) sind (kapazitive) Restströme, die sowohl klein und äußerst kurz ausfallen und daher in dieser Situation vernachlässigt werden können. Der Drain- Strom (TP5) ist gekennzeichnet durch einen überhöhten Strom in Abschnitt A. Hier addieren sich der Ladestrom des Kondensators C7 und der Betriebsstrom der elektronischen Baugruppe, den normalen Betriebsstrom von IL= 1 A in Abschnitt B und keinem Strom ID= 0 A im Übergang von Abschnitt B und C, weil in diesem Zeitabschnitt T4 gesperrt ist. Insgesamt zeigt die kombinierte Schutzeinrichtung für den Betriebsspannungspfad gegen positive und negative Überspannung im Betriebsspannungsbereich 5 V ≤ U_IN ≤ 25 V das erwartete, sehr betriebssichere Verhalten.

Mit den in Fig. 11 dargestellten Zeitverläufen befindet sich die Eingangsspannung U_IN, bzw. das Signal am TP1 zunächst bis ca. der Hälfte des Zeitabschnittes A auf negativem Potenzial (U_IN≤ 0 V) und die Ausgangsspannung (TP2) in diesem Zeitabschnitt befindet sich entsprechend auf 0- Niveau, d.h. die elektronische Baugruppe ist, so wie es sein soll, vor der negativen Eingangsspannung geschützt (T4 hat sich selbst abgeschnürt).

Dementsprechend verhalten sich die übrigen angegebenen Signale: TP3 ist ebenfalls auf 0- Niveau (UG-S= 0 V, sonst würde T4 nicht gesperrt sein); IZ (TP4) ist negativ, da die Diode D3 in Durchlassrichtung betrieben wird, dieser Zustand ist jedoch für den Rest der Schutzschaltung nicht nutzbar und damit unbedeutend; ID= 0 A (TP5), da T4 gesperrt ist. Mit dem Anstieg U_IN in den positiven Spannungsbereich und Überschreiten der UG-S Schwellspannung von T4 und T6 (zweite Hälfte von Abschnitt A) erhält man an TP2 grob jenes Verhalten, wie es bereits in Zusammenhang mit Fig. 10 in diesem Zeitabschnitt geschildert wurde: Die Spannung an TP2 folgt im Wesentlichen dem Verlauf an TP1 bis zum Übergangsbereich der Abschnitte B und C es aufgrund des (wieder) gesperrten Transistors T4 zu einer Abkopplung von TP2 kommt und C7 wieder mit deutlich flacherer Flanke durch den konstanten Betriebsstrom (IL= 1 A) linear bis U_OUT= 0 V entladen wird. U_OUT= 0 V (TP2) wird auch in Zeitabschnitt C beibehalten in dem U_IN (TP1) wieder negativ ist, denn bis C7 nahezu vollständig entladen ist, sperrt der Komparatortransistor T5 den IG-FET T4 aktiv, bis dieser dann anschließend sich selbst abschnürt und weiterhin gesperrt bleibt. Damit ist auch die elektronische Baugruppe wiederum vor der negativen Überspannung sicher geschützt. Die in den übrigen Abschnitten durch die Z-Diode D3 fließenden Ströme (TP4) sind entweder (kapazitive) Restströme, die wieder getrost vernachlässigt werden können oder aber der Strom ist negativ, wenn das Eingangspotential an TP1 negativ ist. Auch dies ist wieder ein vernachlässigbarer, weil nicht nutzbarer Effekt. Der Drainstrom von TP5 ist gekennzeichnet durch einen überhöhten Strom im zweiten Teil von Abschnitt A. Hier addieren sich der Ladestrom des Kondensators C7 und der Betriebsstrom der elektronischen Baugruppe, den normalen Betriebsstrom von IL= 1 A in Abschnitt B und keinem Strom

ID= 0 V in Zeitabschnitten in denen T4 gesperrt ist, weil UG-S= 0 V (TP3) ist. Insgesamt zeigt die kombinierte Schutzeinrichtung für den Betriebsspannungspfad gegen positive und negative Überspannung im Betriebsspannungsbereich -20 V ≤ UIN ≤ 25 V wiederum ein überzeugendes, sehr betriebssicheres Verhalten.

Mit den in Fig. 12 dargestellten Zeitverläufen durchläuft die Eingangsspannung U_IN, bzw. das Signal am TP1 innerhalb des Zeitabschnittes A den gesamten hier betrachteten Hubbereich des Potenzials von -20 V ≤ UIN ≤ 50 V ansteigend. Wie erwartet erscheint die Ausgangsspannung U_OUT an TP2 nur in dem Bereich 3 V ≤ U_OUT ≤ 33,6 V entsprechend UG-S Schwellspannung ≤ U_OUT ≤ AN. Die elektronische Baugruppe wird demnach nicht mit Spannungen versorgt, die außerhalb des regulären Betriebsspannungsbereichs liegen und ist daher in diesem Zeitabschnitt geschützt. Die übrigen Ströme und Spannungen verhalten sich entsprechend: UG-S an TP3 ist nur dann ungleich Null, bzw. negativ wenn weder positive- noch negative Überspannung an TP1 anliegt - ein erwartetes Verhalten. Da durch die Z-Diode D3 in beide Richtungen Strom fließen kann, entsteht entsprechend als IZ (TP4) für negative Eingangsspannungen an TP1 ein negativer Strom - die Diode ist in diesem Augenblick in Vorwärtsrichtung geschaltet - und für positive Überspannungen ein entsprechender Z-Strom, bei in Sperrrichtung geschalteter Z-Diode. In den übrigen Zeitabschnitten mit regulärer Versorgungsspannung (tritt nur in Zeitabschnitt A auf) ist der Diodenstrom erwartungsgemäß 0 A. Ähnliches gilt für den Drainstrom (TP5), der nur in Abschnitt A, während die Eingangsspannung sich innerhalb des regulären Betriebsspannungsbereichs befindet, ungleich Null ist.

Da die Spannung an TP2 auch in den durch Extremwerte bzgl. positiver oder negativer Überspannung an TP1 gekennzeichneten Abschnitten B und C bei 0 V bleibt, zeigt auch dieser anspruchsvollste Betriebszustand wieder auf, dass die elektronische Baugruppe in jeder Hinsicht vollumfänglich geschützt betrieben werden kann.

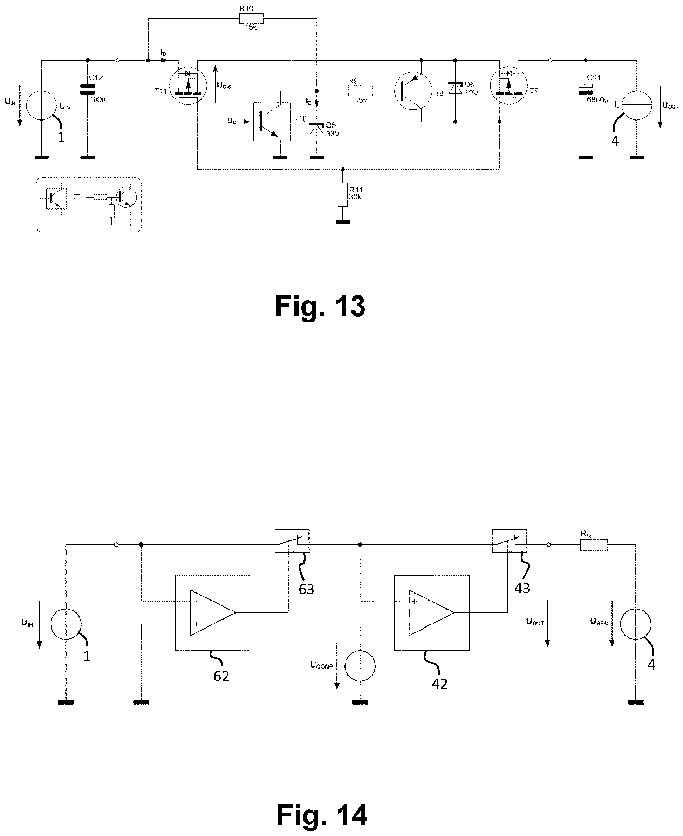

Die mit Fig. 8 allgemein bzw. mit Fig. 9 dimensioniert erläuterte Schaltungsanordnung kann, da die beiden IG-FET als Schaltelemente bereits zur Verfügung stehen, hinsichtlich der Schaltfunktion für die Anwendungen erweitert werden, in denen ein Ein- und Ausschalten der elektronischen Baugruppe von z.B. einem übergeordneten Steuergerät vorgenommen werden soll. Die eigentliche Schutzfunktion gegen positive- und negative Überspannungen wird durch diese Ergänzung in keiner Weise beeinträchtigt. Dass dies mit geringem Aufwand möglich ist, zeigt Fig. 13, in der die Schaltung der Fig. 9 durch den Digital-Transistor T10 ergänzt worden ist. T10 ermöglicht es durch Anlegen eines logikkompatiblen Steuersignals (0 V / 5 V) an die digitale Basis- Elektrode von T10 darüber zu entscheiden, ob die elektronische Baugruppe mit Spannung versorgt wird oder nicht. Dabei gilt folgender Zusammenhang:

Basis- Steuerspannung 0 V: Die elektronische Baugruppe ist im regulären Betriebsspannungsbereich betriebsfähig.
Basis- Steuerspannung 5 V: Die elektronische Baugruppe ist dauerhaft abgeschaltet.

Die Equivalenzschaltung des Digital- Transistors ist eine einfache integrierte Schaltung bestehend aus bipolarem Transistor, Basisvorwiderstand zur Strombegrenzung und Basisableitwiderstand zum sicheren Sperren, dargestellt im strichliert umrandeten Feld in Fig. 13. Der Transistor T10 lässt bei anliegendem positivem Logiksignal an dessen Basis- Elektrode wiederum Basisstrom durch T8 fließen. Der nun einsetzende Basisstrom von T8 bewirkt einen entsprechenden Kollektorstrom, d.h. die Kollektor-Emitterstrecke von T8 schaltet niederohmig durch. Die Folge des Durchschaltens von T8 ist nun schließlich, dass die Steuerspannung UG-S von T9 (und T11) auf nahezu Null Volt reduziert wird, woraufhin dieser öffnet und die elektronische Baugruppe 4, bzw. U_OUT abschaltet. Der geschilderte Wirkmechanismus gilt nur bei positiven Spannungen an U_IN, bei negativen Eingangsspannungen tritt der zuvor beschriebene selbsttätige Abschnürmechanismus durch T11 in Kraft.

Wie im einleitenden Teil erläutert, kann eine zweite Anwendungsart, bei der die elektronische Baugruppe mit einer stabilisierten kleinen Gleichspannung betrieben wird und die Schaltungsanordnung dem Schutz gegen positive und negative Überspannungen im analogen Sensorpfad dienen soll, etwas andere Randbedingungen aufweisen. In Fig. 14 ist eine entsprechend angepasste Verbundschaltung aus zwei Teilschaltungen in Blockdarstellung gezeigt.

Die Blockdarstellung in Fig. 14 basiert grundsätzlich wiederum auf zweien bereits bewährten elektronisch steuerbaren Schaltern 43 und 63, die in Reihe zur zu schützenden elektronischen Baugruppe 4 bzw. deren Sensorquelle geschaltet sind. Beide Schalter können als selbstleitend betrachtet werden, d.h. im nicht angesteuerten Zustand sind beide Schalter 43 und 63 geschlossen (leitend). Auch hier trägt die Reihenschaltung dazu bei, dass eine große Verlustleistung im Überspannungsfall gar nicht erst entstehen kann, d.h. die Probleme, die parallel zur Sensorquelle geschaltete Begrenzer- Klemmschaltungen stets aufweisen, treten bei dem hier gewählten Prinzip nicht auf (vgl. Beschreibung zu Fig. 2). Der Wirkmechanismus der Schutzeinrichtung soll anhand dreier Betriebsfälle separat betrachtet werden:

a) Die Sensorquelle der elektronischen Baugruppe 4 wird regulär betrieben, bzw. belastet, d.h. es ist keine störende Spannungsquelle 1 an den Sensorausgang angeschlossen, die der Sensorquellspannung entgegenwirkt. Im regulären Betriebsfall wird das von der Sensorquelle der elektronischen Baugruppe 4 erzeugte Signal über die in diesem Betriebsfall nicht angesteuerten und damit geschlossenen (d.h. leitfähigen) elektronischen Schalter 63 und 43 an die äußere Schnittstelle durchgeleitet. Dass der elektronische Schalter 43 geschlossen ist, wird sowohl von dem für positive Überspannungen zuständigen Spannungsvergleicher, ausgeführt als Komparator 42, als auch dessen Vergleichsspannungsquelle UCOMP bestimmt. In diesem Fall ist UCOMP so bemessen, dass sie größer ausfällt als die größte (positive) Spannung, die von der Sensorquelle abgegeben werden kann. Dadurch ist sichergestellt, dass das Vergleichsniveau des Komparators 42 nicht überschritten und der elektronische Schalter 43 auch bei Erreichen der positivsten Sensorspannung nicht angesteuert wird und damit leitfähig bleibt. Der Schaltzustand des elektronischen Schalters 63 wird von dem für negative Überspannungen zuständigen Spannungsvergleicher, ausgeführt als Komparator 62 bestimmt. Dieser steuert den elektronischen Schalter 63 stets dann nicht an, sofern die Spannungsdifferenz zwischen nichtinvertierendem Eingang und invertierendem Eingang des Komparators 62 positiv ist. Da der nichtinvertierende Eingang auf Massepotenzial bezogen ist, trifft dies nur für negative also kleinere Sensorpotenziale als Massepotenzial zu. Da die kleinste Signalgröße der Sensorquelle 0 V beträgt, bleiben insgesamt beide elektronischen Schalter 63 und 43 über den gesamten Spannungshubbereich der Sensorquelle leitfähig und das Sensorsignal wird unverzerrt an der äußeren Schnittstelle zur Verfügung gestellt.

b) Mit Spannungsquelle 1 gelangt positive Überspannung in den analogen Sensorpfad. An den analogen Sensorpfad wird ausgehend von Spannungsquelle 1 positive Überspannung zugeführt in dessen Folge der elektronische Schalter 43 öffnet. Dies wird initiiert durch den Komparator 42 dessen Vergleichsspannung so bemessen ist, dass sie stets kleiner (negativer) als die positive Überspannung ausfällt wodurch der Komparator den elektronischen Schalter 43 ansteuert und dieser damit öffnet. Hiermit ist die Sensorquelle von der positiven Überspannung verursacht durch Spannungsquelle 1 abgekoppelt und entsprechend geschützt, ohne dass große Energien umgesetzt worden sind. Das Schaltungsprinzip setzt auch in diesem Fall keinerlei zeitliche Grenzen bzgl. der Dauer der anstehenden positiven Überspannung.

c) Mit Spannungsquelle 1 gelangt negative Überspannung in den analogen Sensorpfad. An den analogen Sensorpfad wird ausgehend von Spannungsquelle 1 negative Überspannung zugeführt in dessen Folge der elektronische Schalter 63 öffnet. Dies wird initiiert durch den Komparator 62 dessen Vergleichsspannung das Massepotenzial darstellt und der weiterhin so konfiguriert ist, dass der elektronische Schalter stets angesteuert und damit gesperrt wird, sobald dessen nichtinvertierender Eingang negativer als das Massepotenzial wird. Da der nichtinvertierende Eingang von 62 an die Ausgangsschnittstelle des Sensorpfades angeschlossen ist, wird demnach bei in dieser Situation vorherrschendem negativem Potenzial der elektronische Schalter 63 gesperrt. Folglich ist dadurch die Sensorquelle von der negativen Überspannung verursacht durch Spannungsquelle 1 abgekoppelt und entsprechend geschützt, ohne dass große Energien umgesetzt worden sind. Das Schaltungsprinzip setzt auch in diesem Fall keinerlei zeitliche Grenzen bzgl. der Dauer der anstehenden negativen Überspannung.

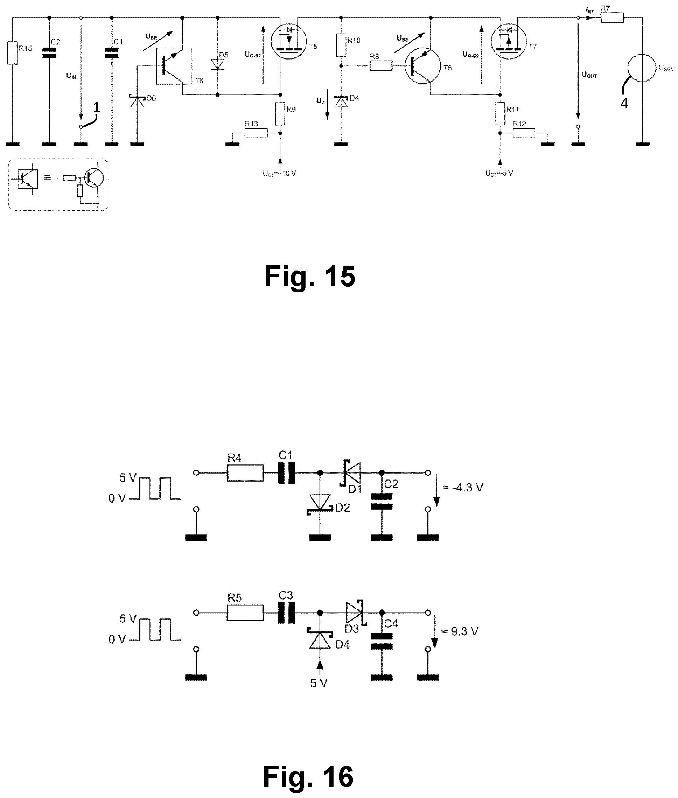

Mit der in Abb. Fig. 15 dargestellten Detailschaltung wird ein präzisiertes Ausführungsbeispiel der Verbundschaltung aus der Blockdarstellung nach Fig. 14 aufgezeigt. Sie vereint bereits die Schutzfunktion gegen positive und negative Überspannungen im Sensorpfad der elektronischen Baugruppe 4 in sich. Zunächst auffallend an Fig. 15 ist, dass der getriebene Aufwand an Bauelementen im Vergleich zur Schaltung für den Betriebsspannungspfad (Fig. 9) größer ist. Dies ist in erster Linie der speziellen Anforderung geschuldet, dass der Sensorpfad auch bei 0 V Pfadpotenzial noch nicht abgeschaltet werden darf und die Schalttransistoren T5 und T7 somit noch voll leitfähig sein müssen. Soll das bisherige Grundkonzept mit IG-FET Transistoren vom Anreicherungstyp (selbstsperrend) als elektronische Serienschalter beibehalten werden, so muss dafür gesorgt werden, dass bei 0 V Pfadpotenzial, die resultierende Gate-Source Spannung für beide Transistoren T5 und T7 noch nicht deren jeweilige Gate-Source Schwellspannung unterschreitet. In Fig. 15 wird dies durch entsprechend dimensionierte Hilfsspannungen erreicht, die an das jeweilige Gate zugeführt werden, so dass es fortan nicht mehr auf Massepotenzial bezogen ist. Eine Veränderung hat auch der Serienschalter T5 erfahren denn dieser ist nun als N-Kanal IG-FET ausgeführt. Die Auswahl ist darauf zurück zu führen, weil T5 nun eine separate Ansteuerung mit eigenem Komparator benötigt, da er in dieser Betriebsweise sich nicht mehr selbsttätig abschnüren soll und somit im Bedarfsfall aktiv gesperrt werden muss. Im Sinne einer möglichst einfachen Ansteuerung von T5 ist der Einsatz eines N- Kanal IG-FET an dieser Stelle vorteilhaft.

Zur Funktion der Einzelbauelemente und der Gesamtschaltung:

Wenn in Fig. 15 zunächst sämtliche Bauelemente linksseitig von T5 vernachlässigt werden, so erhält man mit IG-FET T7 und Komparatortransistor T6 nebst Peripherie (R8, R10, R11 und D4), die bereits in der Beschreibung zu Fig. 5 vorgestellte Schaltungsanordnung gegen positive Überspannung, deren Funktion dort bereits detailliert diskutiert wurde. Als autonom arbeitende Teilschaltung unterscheidet sie sich von der vorgenannten Schaltung nur dadurch, dass in diesem Fall im normalen regulären Betrieb eine analoge Sensorspannung USEN, bzw. UOUT an die Drain- Elektrode von T7 angelegt wird und diese im Regelbetrieb der Schaltung unverändert über den Source- Anschluss nach außen geführt wird, wobei der Drain- Source Kanal von T7 niederohmig in dieser Situation ist. Damit das analoge Sensorsignal unverzerrt mit dem angestrebten Hubbereich übertragen werden kann, ist als weitere Veränderung die Gate-Elektrode von T7 auf ein negatives Potenzial, in diesem Fall auf -5 V bzgl. Massepotenzial, festgelegt worden. Der mögliche übertragbare Hubbereich des analogen Sensorsignals durch den leitenden T7 wird damit bei konstantem Gate-Potenzial (näherungsweise) eingegrenzt durch die Gate- Source Schwellspannung von T7 am unteren Ende, sowie durch den Betrag der maximal erlaubten Gate-Source Spannung des Transistors T7 am oberen Ende des Hubbereichs. In vereinfachter Intervallschreibweise kann der Hubbereich mit T7 als Schaltelement auch folgendermaßen ausgedrückt werden. Für lineare Signalübertragung über T7 gilt:

$$U_{G2} - U_{G\text{-}S2min} \leq U_{OUT} \leq |U_{G\text{-}S2max}|.$$

Einschränkend muss jedoch festgehalten werden, dass das obere Grenzniveau in der Gleichung nur stimmt, wenn gilt: $|U_{G\text{-}S2max}| \leq AN$, denn sonst würde die obere Grenze vom Abschaltniveau AN definiert werden. Das (positive) Abschaltniveau AN ist unverändert zu der in Zusammenhang mit Fig. 5 formulierten Näherung. Diese lautete:

$$AN \approx U_Z + U_{BE}.$$

Das Überschreiten der transistorspezifischen maximalen Gate- Source Spannung des IG-FET T7 hätte einen sich einstellenden Gate- Strom aufgrund von Durchbrucherscheinungen im Halbleiter zur Folge, woraus sich neben dem verbotenen Betriebszustand des Transistors T7 auch eine Stromentnahme aus dem Sensorsignal ergibt, eine Eigenart, die bei strenger Einhaltung der im einleitenden Teil formulierten Anforderungen an die Schutzschaltung nicht gestattet ist. Der linke Schaltungsteil in Fig. 15 stellt die neuartige und autonome Schutzschaltung gegen negative Überspannung im Sensorpfad dar. Hier ist mit dem N-Kanal IG-FET T5 als elektronischem Schalter im regulären Sensorbetrieb dessen Gate- Elektrode an eine gegenüber Massepotenzial deutlich positivere Spannungsquelle, in diesem Fall +10 V, angeschlossen, so dass der Transistor T5 leitfähig ist, weil seine Gate- Source Spannung UG-S1 mit regulärem Sensorsignalhub stets positiv ausfällt. Daher ist der Drain- Source Kanal von T5 in dieser Situation niederohmig und das Sensorsignal kann von der Source-Elektrode des T7 kommend, praktisch unverändert an den Sensorausgang durchgereicht werden. Gate- Widerstand R9 übernimmt die Funktion der Strombegrenzung in bestimmten Betriebssituationen. Der Sensorausgang ist mit einer Ersatzlast bestehend aus R15 || C2 abgeschlossen. Auch beim Transistor T5 bestimmt das Gate-Potenzial, bzw. die Grenzen des Gate- Source Potenzials den linearen Aussteuerbereich für das Sensorsignal. Da es sich hier um einen N-Kanal IG-FET handelt, bestimmt, bei konstantem Gate- Potenzial, die Gate-Source Schwellspannung von T5 das obere (positive) Ende des Aussteuerbereichs und, zumindest theoretisch, die vom Betrag her maximal zulässige negative Gate- Source Spannung die untere Aussteuergrenze. Ähnlich wie in der zuvor genannten Gleichung kann daher formuliert werden, dass für lineare Signalübertragung über T5 gilt:

$$-|U_{G\text{-}S1max}| \leq U_{OUT} \leq U_{G1} - U_{G\text{-}S1min}.$$

Dass das Potenzial auf der Sensorleitung das in dieser Gleichung aufgeführte untere Grenzniveau $-|U_{G\text{-}S1max}|$ niemals erreichen kann, dafür sorgt der npn-Komparatortransistor T8 in Fig. 15. Zusammen mit (Schottky-) Diode D1 bildet T8 den Spannungskomparator, der T5 bei negativem Potenzial sperrt wenn der Emitter des Transistors T8 um dessen Schwellspannung UBE negativer geworden ist als dessen Basis. Der einsetzende Basisstrom hat einen entsprechenden Kollektorstrom von T8 zur Folge, d.h. dessen Kollektor- Emitter Strecke ist leitend und die Gate- und Source Elektroden von T5 sind daher potenzialgleich gemacht worden - UG-S1 fällt auf 0 V zusammen und T5 ist abgeschaltet. Die Sensorquelle USEN ist somit vom außen anliegenden negativen Potenzial sicher abgetrennt und somit vor jeglichem negativem Potenzial, an dem Sensorausgang eingeführt, geschützt.

Von Bedeutung an dieser Stelle ist auch wieder die Anordnung der Source- und Drain-Elektrode von T5 in Bezug auf die Spannungen U_IN und U_OUT mit sich daraus ergebender Polarisierung der Substratdiode von T5. Mit der gewählten Anordnung wird erreicht, dass die Substratdiode für negative Spannungen UIN nichtleitend geschaltet ist und T5 durch entsprechende Ansteuerung daher abschaltbar bleibt (im umgekehrten Fall wäre die Diode von T5 dauerhaft leitend gepolt und ein Abschalten von T5 bei negativen Überspannungen wäre unmöglich). Als Komparatortransistor ist in diesem Schaltungsteil mit T8, vorwiegend aus ökonomischen Gründen, ein Digital-Transistor eingesetzt worden, der sämtliche Schaltungselemente des Spannungskomparators bereits in sich vereint. Aus der strichliert umrandeten Equivalenz-schaltung in Fig. 15 ist erkennbar, dass in T8 auch ein interner Ableitwiderstand zwischen Basis und Emitter zum Abführen etwaiger Basis- Restströme enthalten ist. Um im Normalbetrieb des Sensors, d.h. es tritt weder positive noch negative Überspannung am Anschluss UIN auf, einen kontinuierlichen Stromfluss über den internen Ableitwiderstand und Basisvorwiderstand des Digital-Transistors T8 zu verhindern, ist die Schottky- Diode D6 vorgesehen. Sie verhindert, dass im gesamten positiven Hubbereich des Sensorsignals durch die Schutzschaltung kein Strom aus dem Sensorsignal entnommen und somit eine Verfälschung desselben vermieden wird. Diode D6 hat jedoch auch einen Einfluss auf den Einsatzpunkt, bzw. das negative Abschaltniveau -AN des Schutzschaltungsteils gegen negative Überspannung, das bestimmt wird von der UBE Schwellspannung des Komparatortransistors T8 und der Vorwärtsspannung der Diode D6. Das negative Abschaltniveau -AN ergibt sich daher näherungsweise zu:

$$-AN \approx U_{BE\_T8} + U_{F\_D6}.$$

Mit UBE_T8 ≈ 0,7 V und UF_D6 ≈ 0,3 V bei einer Schottky- Diode, erhält man näherungsweise ein Abschaltniveau von -AN ≈ 1 V. Dass die Schutzschaltung nicht exakt bei 0 V abschaltet muss in der Praxis keinen Nachteil darstellen, denn negative Spannungen von einem Volt als Fehlerspannung angelegt an den Sensorausgang treten in der Praxis nur sehr selten auf und stellen zudem für die meisten Sensorausgänge noch keine kritische Gefahr dar. Viel häufiger ist das verpolte Anschalten von Betriebsspannungsleitungen an den Sensorausgang, wodurch deutlich negativere (Über-) Spannungen entstehen und bei denen der Schaltungsteil um Transistor T8, nach oben beschriebenem Schema, unmittelbar eine Abtrennung der Sensorquelle vornimmt. Mit einem -AN ≈ 1 V erhält man darüber hinaus einen wichtigen Sicherheitsabstand zum untersten Sensorpotenzial von 0 V, der in der Praxis dafür sorgt, dass über sämtliche Toleranzen hinweg keine Verfälschung des Sensorsignals im normalen Betrieb erfolgen kann. In der Schaltung in Fig. 15 sind noch weitere, bisher ungenannte Bauelemente abgebildet, deren Funktion in den bisher betrachteten Betriebszuständen eine eher untergeordnete Rolle gespielt haben. Es sind dies:

D5: Da Transistor T5 ohne Schutzeinrichtung gegen positive Überspannung mit seiner Source- Elektrode unmittelbar am Sensorausgang angeschlossen ist, besteht grundsätzlich die Gefahr, dass dessen maximal erlaubte Gate- Source Spannung überschritten und T5 dadurch zerstört wird. Diode D5 vermeidet dies, indem sie verhindert, dass das Source- Potenzial wesentlich größer als dessen Gate-Potenzial werden kann. Sobald das Source- Potenzial von T5 dessen Gate-Potenzial übersteigt begrenzt die nun leitende Diode D5 das Gate- Source Potenzial auf die Vorwärtsspannung der Siliziumdiode D5, d.h. das Gate- Source Potenzial kann nicht wesentlich größer als ca. UG-S1 ≈ -0,7 V werden und der Transistor T5 ist somit geschützt.

R12 und R13: Die Widerstände sorgen für ein definiertes Masse- Bezugspotenzial der Gate- Elektroden von T5 (R13) und T7 (R12) in dem Betriebszustand, in dem die Betriebsspannung der elektronischen Baugruppe abgeschaltet und die Hilfsspannungen +10 V (UG1 an T5) und -5 V (UG2 an T7) nicht verfügbar sind.

C1: EMV oder ESD Kondensator, der in Automotive Produkten üblicherweise im unmittelbaren Eingang einer Schaltung angeordnet ist. Er ist nur der Vollständigkeit halber aufgeführt.

Bei abgeschalteter Betriebsspannung der elektronischen Baugruppe verbleibt die kombinierte Schutzeinrichtung für den analogen Sensorpfad gegen positive und negative Überspannung trotz fehlender Hilfsspannungen UG1 und UG2, bzgl. der Schutzwirkung gegen positive- und negative Überspannungen, vollständig betriebsfähig, d.h. es wirken die oben beschriebenen Mechanismen unverändert bei sich einstellender positiver- oder negativer Überspannung am Sensorausgang. Dies ist zurückzuführen auf die autonome Arbeitsweise der Komparatortransistoren T8 und T6 in Abb. 2.11, die ihre Funktion auch in diesem Fall wieder vollkommen unabhängig von der Betriebsspannungssituation ausführen können, da sie im Überspannungsfalle die benötigte Energie für ihre Funktion aus der Überspannungsquelle entnehmen. Die Sensorausgangsstufe der elektronischen Baugruppe ist daher in jeglicher Betriebssituation vollumfänglich gegen jedwede Art von Überspannung sicher geschützt.

Um in der Schutzschaltung in Fig. 15 das Sensorsignal mit einem Hubbereich bis auf mindestens 0 V linear übertragen zu können, sind besondere Gate-Spannungen der Transistoren T5 und T7 vonnöten, die zunächst nicht unbedingt in jeder elektronischen Baugruppe verfügbar sind. Fig. 16 zeigt beispielhaft zwei sog. Ladungspumpen mit denen bei 5 V Betriebsspannung und einer höherfrequenten Rechteckspannung, die benötigte positive und negative Gate-Spannung erzeugt werden kann. Das Rechtecksignal muss aus einer niederohmigen Quelle, z.B. einem CMOS- Gatter oder einem μC Port entstammen. Es handelt sich um Standardschaltungen, die stets dann vorteilhaft eingesetzt werden können, wenn sowohl ein geringer Leiterplattenplatz und auch die Kosten im Vordergrund stehen. Bei geringer Stromentnahme stellt sich bei der oberen Inverter- Ladungspumpe ein um die Vorwärtsspannung der Dioden D1 und D2 verminderte negative Ausgangsspannung der ursprünglichen Eingangsspannung ein. Bei der unteren Verdoppler- Ladungspumpe ist es die doppelte Ausgangsspannung wiederum vermindert um den Spannungsfall an beiden beteiligten Dioden. Die genaue absolute Größe beider Ausgangsspannungen ist unbedeutend solange das analoge Sensorsignal durch die in den zuvor genannten Gleichungen formulierten Grenzen nicht eingeschränkt wird.

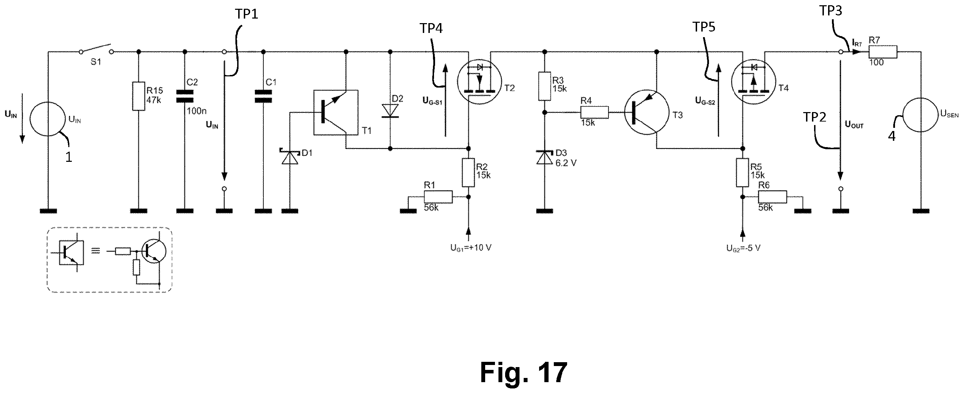

Die im vorhergehenden Abschnitt dargestellte Schutzeinrichtung gegen positive- und negative Überspannungen im analogen Sensorpfad, soll im Folgenden anhand eines Anwendungsbeispiels näher untersucht werden. Hierzu werden im Zeitbereich verschiedene aussagekräftige Spannungen und Ströme erfasst, die das in dem vorangegangenen Abschnitt beschriebene Verhalten unter zwei verschiedenen Betriebszuständen widerspiegeln sollen. Als Basis dient die in Fig. 17 dargestellte, nun dimensionierte Schaltung, die der bekannten Verbundschaltung aus Fig. 15 entspricht. Mit TP1 bis TP5 soll jeweils auf das Signal (Spannung/Strom) verwiesen werden, das in der nachfolgenden Auswertung abgebildet wird.

Die abgebildete Schaltung in Fig. 17 ist auf folgende Kennwerte hin, beispielhaft, dimensioniert worden:

Der reguläre Sensor-Hubbereich beträgt U_OUT = 0 V bis 5 V.

Das Abschaltniveau (AN) für positive Überspannungen im Sensorpfad, eingeprägt durch UIN ergibt sich näherungsweise zu: AN≈ UZ+UBE. Mit UZ= 6,2 V (wird von D3 festgelegt) und UBE= 0,7 V (wird vom Komparatortransistor T3 festgelegt) erhält man näherungsweise ein Abschaltniveau von AN≈ 6,9 V. In dieser Dimensionierung der Schaltung wird davon ausgegangen, dass die maximal erlaubte Gate- Source Spannung von T4 größer als das festgelegte Abschaltniveau ist, d.h. mit IUG-S_maxl > AN kann auf einen weiteren Schutz des T4 verzichtet werden.

Das negative Abschaltniveau (-AN) ergibt sich zu -AN≈ UBE_T1 + UF_D1 , d.h. -AN≈ 0,7 V + 0,3 V= 1V.

In der allgemeinen Dimensionierung der Bauelemente ist auch hier wieder die ökonomische Komponente berücksichtigt worden. Die Dimensionierung der Bauelemente in Fig. 17 ist weitestgehend so ausgeführt, dass die Bauelemente funktionell zwar noch vorhanden, jedoch physisch zusammenfassbar sind. Dies ist ein weiterer Schritt zur Minimierung der Anzahl der zu bestückenden Bauelemente auf einer Leiterplatte, woraus sich eine vereinfachte Fertigung der Schutzeinrichtung ergibt. Folgende Bauelemente sind von dieser Maßnahme betroffen:

Die IG-FET T2 und T4 sind von ihren technischen Grunddaten weitestgehend identisch. Diese können in einem Doppel- pn- IG-FET zusammengefasst werden. Als Ersparnis ergibt sich ein zu bestückender Transistor.

Die in der Schutzschaltung benötigten Widerstände sind durchweg vom Nennwert her gleich groß dimensioniert, sofern die Eigenschaften der Schutzschaltung dadurch nicht beeinträchtigt werden. Dies gilt für die Widerstände R2, R3, R4 und R5, die durchweg den Nennwert von R= 15 kΩ aufweisen und dadurch in einem 4-fach Widerstandsarray zu je 15 kΩ Nennwert zusammengefasst werden können. Die Widerstände R1 und R6 sind hochohmiger dimensioniert worden, damit sie die Hilfsspannungsquellen nicht über Gebühr belasten. Mit zweimal 56 kΩ können sie dennoch in einem 2-fach Widerstandsarray zusammengefasst werden. Vier zu bestückende Widerstände können somit eingespart werden.

Zur weiteren Untersuchung der dimensionierten Verbundschaltung in Fig. 17 ist für die störende Eingangsspannung UIN (d.h. das Signal am TP1) wieder ein periodischer Zeitverlauf definiert worden, der sowohl einen rampenförmigen Anstieg, nachfolgend in Zeitabschnitt A verlaufend, einen konstanten Verlauf auf hohem (positivem) Spannungsniveau, nachfolgend in Zeitabschnitt B verlaufend, einen konstanten Verlauf auf niedrigem Spannungsniveau, nachfolgend in Zeitabschnitt C verlaufend, sowie einen Spannungssprung enthält. Die Sensorquelle erzeugt mit U_OUT zur einfacheren Unterscheidung beider Signale ein sinusförmiges Sensorsignal mit kürzerer Periodendauer als das Rampen-Sprung Störsignal am TP1. Es sollen zwei Betriebsfälle unterschieden werden:

Die Störspannungsquelle ist an den Sensorausgang angeschlossen und weist einen Spannungsbereich von -20 V ≤ U_IN ≤ 20 V, d.h. U_IN durchläuft die Spannungsbereiche negative Überspannung, regulärer Betriebsspannungsbereich sowie positive Überspannung.

Die Störspannungsquelle ist von Sensorausgang abgetrennt und der Sensor überträgt sein sinusförmiges Sensorsignal mit Nennspannungshub. Diese Betriebsart soll etwaige Verzerrungen durch die Schutzschaltung während des regulären Betriebs aufdecken.

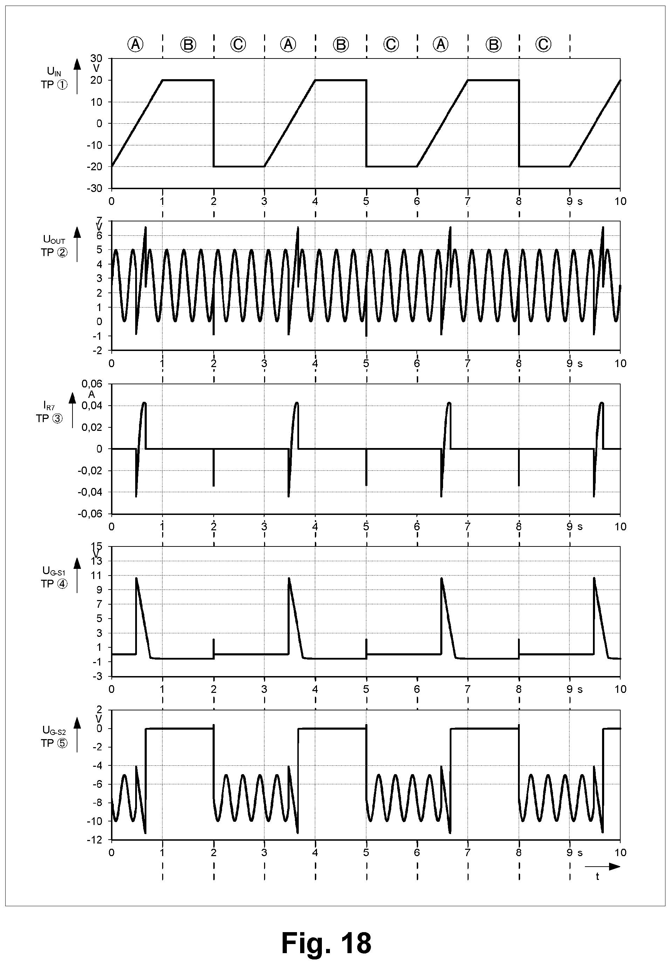

In den in Fig. 18 dargestellten Zeitverläufen arbeitet eine (Stör-) Eingangsspannung U_IN, bzw. das Signal am TP1 mit dem Wertebereich -20 V ≤ U_IN ≤ 20 V gegen das kontinuierlich vorhandene sinusförmige Sensorsignal USEN. Der Schalter S1 ist geschlossen. In dieser Betriebssituation dürfen signifikante (Kurzschluss-) Ströme aus dem Sensor aufgrund der gegeneinander arbeitenden Spannungsquellen, nur in dem Spannungsbereich -AN ≤ U_OUT ≤ AN entnommen werden, der hierzu eine Strombegrenzung beinhaltet, die hier vereinfacht durch den Widerstand R7 realisiert ist. Ein Übersteigen der Spannung UOUT (TP2) über die Grenzen -AN ≤ U_OUT ≤ AN ist nicht zulässig, da dies zur Zerstörung der Sensorausgangsstufe führen kann. Dass die oben genannten Ansprüche erfüllt werden, zeigt sich bereits in Zeitabschnitt A: Während die Störspannungsquelle U_IN am TP1 ihren gesamten Wertebereich durchläuft, stößt das Sensorsignal an U_OUT nur in dem schmalen Zeitabschnitt in dem sich das Signal am TP1 innerhalb des Intervalls -AN ≤ UOUT ≤ AN befindet an die Grenzen -AN, bzw. AN. Der Strom durch R7 (TP3), gleichbedeutend dem Strom, den die Sensorquelle aufwenden muss, tritt auch nur in diesem schmalen Zeitabschnitt deutlich hervor. Damit zeigen schon die beiden Signalverläufe an TP2 und TP3 allein, dass nur in dem Intervall -AN ≤ U_OUT ≤ AN, so wie es sein soll, beide Quellen U_IN (TP1) und UOUT (TP2) zusammen-geschaltet sind (es kann ein Ausgleichsstrom durch R7 fließen), während sie für die übrige Zeit im Abschnitt A, nämlich während der Phasen positiver und negativer Überspannung wegen der Größe von U_IN getrennt sind. Entsprechend verhält sich die Gate- Source Spannung des Transistors T2 am TP4: Während der Phase negativer Überspannung ist UG-S1= 0 weil sie durch T1 kurzgeschlossen wird, im Intervall - AN ≤ U_OUT ≤ AN ist sie positiv- der Transistor T2 leitet und mit Überschreiten des Gate- Potenzials von T2 durch die Störspannungsquelle U_IN (TP1) verbleibt die Spannung UG-S1 auf ca. -0,7 V. Kleiner kann die UG-S1 Spannung nicht mehr werden, da die nunmehr leitende Diode D2 dies wirkungsvoll verhindert. Die Spannung UG-S2 verhält sich im Zeitabschnitt A erwartungsgemäß: Bei negativen Eingangsspannungen U_IN (TP1) sowie im Intervall -AN ≤ U_OUT ≤ AN ist Transistor T4 durch ein hinreichend negatives UG-S2 Potenzial eingeschaltet während es mit Überschreiten von AN zu 0 V zusammenfällt. In den übrigen Zeitabschnitten B und C die gekennzeichnet sind durch Phasen positiver konstanter Überspannung (Abschnitt B) und negativer konstanter Überspannung (Abschnitt C) der Eingangsspannung U_IN (TP1) verhalten sich die übrigen Signale genauso, wie es erforderlich ist. Durch den dauerhaften Zustand positiver oder negativer Überspannung an dem Sensorsignalausgang (TP1) ist die eigentliche Sensorquelle auch dauerhaft von der Quelle U_IN (TP1) abgetrennt - ein erwartetes Verhalten. Der Strom durch den Widerstand R7 liegt demzufolge auch in dieser Situation dauerhaft bei 0 A (TP3). Die Sensorquelle ist also trotz der Situation positiver oder negativer Überspannung an TP1 sicher geschützt und von der zerstörerischen Störquelle U_IN sicher abgekoppelt. Die Gate- Source Potenziale UG-S1 (TP4) und UG-S2 (TP5) müssen, wenn die Schutz-einrichtung die ordnungsgemäße Funktion erfüllt, die entsprechend korrespondierenden Potenziale führen. Dies ist auch der Fall: TP4, d.h. UG-S1 des Transistors T2 ist im Falle positiver Überspannung im Zeitabschnitt B wieder leicht negativ (UG-S1 = -0,7 V) vorgespannt - Ursache ist wieder die leitende Schutzdiode D2, und im Falle negativer Überspannung im Zeitabschnitt C ist UG-S1 erwartungsgemäß 0 V schließlich muss in dieser Situation T2 den sicheren Sperrzustand einnehmen. TP5, d.h. UG-S2 des Transistors T4 bleibt entsprechend seiner Ansteuerung in dem Zeitabschnitt positiver Überspannung (B) auf Nullpotenzial (T4 ist gesperrt) und in dem übrigen Zeitabschnitt C entsprechend leitfähig, da das UG-S2 Potenzial hinreichend negativ ist.

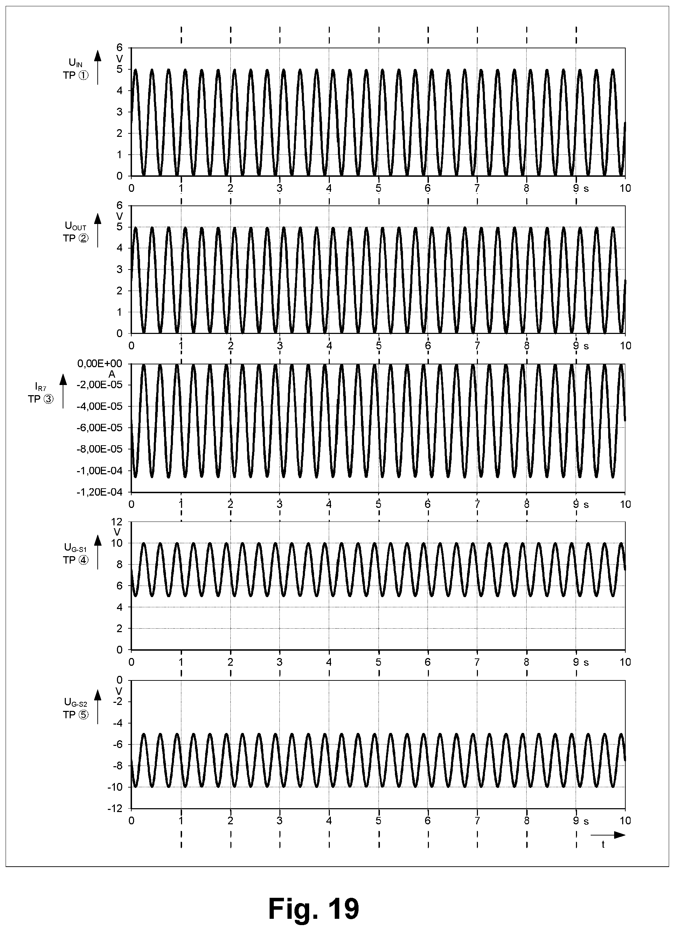

Mit den in Fig. 19 dargestellten Zeitverläufen sei abschließend noch das Übertragungsverhalten der Schutzeinrichtung gegen positive und negative Überspannung im analogen Sensorpfad im regulären Betrieb, d.h. ohne jegliche Überspannungsquelle betrachtet. Der Schalter S1 in Fig. 17 ist in diesem Fall geöffnet und die Sensorquelle ist, neben ihrem Innenwiderstand R7 mit der Ersatzlast R15 || C2, d.h. 47 kΩ || 100 nF, abgeschlossen. Vergleicht man die Oszillogramme des Sensor Quellsignals an TP2 mit dem Zeitverlauf am Ausgang der Schutzschaltung (TP1), so ist zumindest im Zeitbereich mit linearer Amplitudenachse keinerlei Verfälschung des Sensorsignals nach Durchlaufen der beiden Source- Drain -Strecken der IG- FET Transistoren T2 und T4 zu erkennen. Dies ist sicher auch auf die großzügig gewählten Gate- Potenziale zurückzuführen, die wie im Oszillogramm am TP4 und TP5 zu erkennen ist, trotz maximalem Sensor- Spannungshub, noch einen deutlichen Sicherheitsabstand zur Gate- Source Schwellspannung der beiden IG-FET Transistoren bereithält. Es verbleibt noch der Strom durch den Widerstand R7. Dieser wird bestimmt aus der Ersatzlast, d.h. hier in erster Linie aus dem resistiven Anteil mit R15= 47 kΩ.

**Patentansprüche**

1. Schaltungsanordnung zum Schutz einer elektronischen Baugruppe (4), umfassend die elektronische Baugruppe (4),

    eine Spannungsquelle (1),
    eine zwischen die elektronische Baugruppe (4) und die Spannungsquelle (1) geschaltete erste Teilschaltung,
    wobei die erste Teilschaltung einen Komparator (42) und einen elektronisch steuerbaren Schalter (43) umfasst,
    wobei der Komparator (42) der ersten Teilschaltung ausgebildet ist, eine Spannung der Spannungsquelle (1) mit einer Vergleichsspannung zu vergleichen und davon abhängig den Schalter (43) anzusteuern,
    wobei der Schalter (43) zu der elektronischen Baugruppe (4) in Reihe geschaltet ist und
    eine zwischen die elektronische Baugruppe (4) und die Spannungsquelle (1) geschaltete zweite Teilschaltung,
    wobei die zweite Teilschaltung einen Komparator (62) und einen elektronisch steuerbaren Schalter (63) umfasst,
    wobei der Komparator der zweiten Teilschaltung ausgebildet ist, negative Spannungsdifferenzen zwischen der Spannungsquelle (1) und der Spannung an der elektronischen Baugruppe zu erfassen und davon abhängig den Schalter (63) anzusteuern,

wobei der Schalter (63) zu der elektronischen Baugruppe (4) in Reihe geschaltet ist, **dadurch gekennzeichnet, dass** der Komparator (42, 62) der ersten und der zweiten Teilschaltung einen gemeinsamen bipolaren Transistor aufweist, wobei dessen Basis be der ersten Teilschaltung über einen Vorwiderstand an die Vergleichsspannung angeschlossen ist und dadurch wirksam beeinflusst wird und bei der zweiten Teilschaltung über den Vorwiderstand und einen weiteren Widerstand an die Spannungsquelle (1) angeschlossen ist, wobei der Komparator (42, 62) der ersten und der zweiten Teilschaltung gemeinsam ist.

2. Schaltungsanordnung gemäß Anspruch 1, **dadurch gekennzeichnet, dass** die Komponenten der ersten Teilschaltung zum Schutz der elektronischen Baugruppe (4) gegen eine positive Überspannung und die Komponenten der zweiten Teilschaltung zum Schutz der elektronischen Baugruppe (4) gegen eine negative Überspannung ausgebildet sind.

3. Schaltungsanordnung gemäß einem der Ansprüche 1 bis 2, **dadurch gekennzeichnet, dass** der Schalter (43) der ersten Teilschaltung als selbstsperrender Transistor ausgeführt ist, wobei dessen Source-Elektrode an die Spannungsquelle (1) und dessen Drain-Elektrode an die elektronische Baugruppe (4) angeschlossen ist und dessen Gate-Elektrode auf Massepotenzial bezogen ist.

4. Schaltungsanordnung gemäß einem der Ansprüche 1 bis 3, **dadurch gekennzeichnet, dass** der Schalter der zweiten Teilschaltung als selbstsperrender Transistor wobei dessen Source-Elektrode an die elektronische Baugruppe (4) und dessen Drain-Elektrode an die Spannungsquelle (1) angeschlossen ist und dessen Gate-Elektrode auf Massepotenzial bezogen ist.

5. Schaltungsanordnung gemäß den Ansprüchen 3 und 4, **dadurch gekennzeichnet, dass** der bipolare Transistor des Komparators (42, 62) mit seinem Emitter an den Source-Elektroden und mit seinem Kollektor an den Gate-Elektroden der jeweiligen selbstsperrenden Transistoren der ersten und zweiten Teilschaltung angeschlossen ist.

6. Schaltungsanordnung gemäß den Ansprüchen 3 und 4, **dadurch gekennzeichnet, dass** jeweils die Source-Elektroden und die Gate-Elektroden der selbstsperrenden Transistoren miteinander elektrisch leitend verbunden sind.

7. Schaltungsanordnung gemäß einem der Ansprüche 1 bis 6, **dadurch gekennzeichnet, dass** die Schalter (43, 63) der ersten und zweiten Teilschaltung als Doppelschalter in einem Bauteil zusammengefasst und / oder alle Widerstände der Schaltungsanordnung gleich hohe Widerstandswerte aufweisen.

8. Schaltungsanordnung gemäß einem der Ansprüche 1 bis 7, **dadurch gekennzeichnet, dass** der Schalter (63) der zweiten Teilschaltung als selbstsperrender Isolierschicht-Feldeffekttransistor in n-Kanal-Ausführung ausgeführt ist, wobei dessen Source-Elektrode an den Emitter und dessen Gate-Elektrode an den Kollektor des Komparators (62) angeschlossen ist.

9. Schaltungsanordnung gemäß Anspruch 8, **dadurch gekennzeichnet, dass** die Gateanschlüsse der Schalter (43, 46) der ersten und zweiten Teilschaltung jeweils Anschlussmöglichkeiten zum Einbringen von Hilfsspannungen aufweisen.

10. Schaltungsanordnung gemäß einem der vorhergehenden Ansprüche, **dadurch gekennzeichnet, dass** die Spannungsquelle (1) als Kraftfahrzeugbatterie und die elektronische Baugruppe (4) als Steuergerät oder die Spannungsquelle (1) als Steuergerät und die elektronische Baugruppe (4) als Sensor ausgebildet ist.

**Claims**

1. Circuit arrangement for protecting an electronic assembly (4), comprising the electronic assembly (4),

   a voltage source (1),
   a first subcircuit connected between the electronic assembly (4) and the voltage source (1),
   wherein the first subcircuit comprises a comparator (42) and an electronically controllable switch (43),
   wherein the comparator (42) of the first subcircuit is configured to compare a voltage of the voltage source (1) with a comparison voltage and to control the switch (43) in a manner dependent thereon,
   wherein the switch (43) is connected in series with the electronic assembly (4), and
   a second subcircuit connected between the electronic assembly (4) and the voltage source (1),
   wherein the second subcircuit comprises a comparator (62) and an electronically controllable switch (63),
   wherein the comparator of the second subcircuit is configured to detect negative voltage differences between the voltage source (1) and the voltage at the electronic assembly and to control the switch (63) in a manner dependent thereon,
   wherein the switch (63) is connected in series with the electronic assembly (4),

**characterized in that** the comparator (42, 62) of the first subcircuit and of the second subcircuit has a common bipolar transistor, wherein the base of said transistor, in the case of the first subcircuit, via a series resistor, is connected to the comparison voltage and is effectively influenced thereby, and, in the case of the second subcircuit, via the series resistor and a further resistor, is connected to the voltage source (1), wherein the comparator (42, 62) is common to the first subcircuit and to the second subcircuit.

2.  Circuit arrangement according to Claim 1, **characterized in that** the components of the first subcircuit are configured for protecting the electronic assembly (4) against a positive overvoltage and the components of the second subcircuit are configured for protecting the electronic assembly (4) against a negative overvoltage.

3.  Circuit arrangement according to either of Claims 1 and 2, **characterized in that** the switch (43) of the first subcircuit is embodied as a normally off transistor, wherein the source electrode of said transistor is connected to the voltage source (1) and the drain electrode of said transistor is connected to the electronic assembly (4) and the gate electrode of said transistor is referenced to earth potential.

4.  Circuit arrangement according to one of Claims 1 to 3, **characterized in that** the switch of the second subcircuit is embodied as a normally off transistor, wherein the source electrode of said transistor is connected to the electronic assembly (4) and the drain electrode of said transistor is connected to the voltage source (1) and the gate electrode of said transistor is referenced to earth potential.

5.  Circuit arrangement according to Claims 3 and 4, **characterized in that** the bipolar transistor of the comparator (42, 62) is connected by its emitter to the source electrodes and by its collector to the gate electrodes of the respective normally off transistors of the first and second subcircuits.

6.  Circuit arrangement according to Claims 3 and 4, **characterized in that** in each case the source electrodes and the gate electrodes of the normally off transistors are electrically conductively connected to one another.

7.  Circuit arrangement according to one of Claims 1 to 6, **characterized in that** the switches (43, 63) of the first and second subcircuits are combined as a double switch in one component and/or all the resistors of the circuit arrangement have resistance values of the same magnitude.

8.  Circuit arrangement according to one of Claims 1 to 7, **characterized in that** the switch (63) of the second subcircuit is embodied as a normally off insulated-gate field-effect transistor in an n-channel embodiment, wherein the source electrode of said transistor is connected to the emitter and the gate electrode of said transistor is connected to the collector of the comparator (62).

9.  Circuit arrangement according to Claim 8, **characterized in that** the gate terminals of the switches (43, 46) of the first and second subcircuits in each case have connection possibilities for introducing auxiliary voltages.

10. Circuit arrangement according to one of the preceding claims, **characterized in that** the voltage source (1) is configured as a motor vehicle battery and the electronic assembly (4) is configured as a control unit or the voltage source (1) is configured as a control unit and the electronic assembly (4) is configured as a sensor.

**Revendications**

1.  Arrangement de circuit destiné à protéger un sous-ensemble électronique (4), comprenant le sous-ensemble électronique (4),

    une source de tension (1),
    un premier circuit partiel branché entre le sous-ensemble électronique (4) et la source de tension (1),
    le premier circuit partiel comprenant un comparateur (42) et un commutateur (43) commandable électroniquement,
    le comparateur (42) du premier circuit partiel étant configuré pour comparer une tension de la source de tension (1) avec une tension de comparaison et pour commander le commutateur (43) en fonction de cela,
    le commutateur (43) étant branché en série avec le sous-ensemble électronique (4) et
    un deuxième circuit partiel branché entre le sous-ensemble électronique (4) et la source de tension (1),
    le deuxième circuit partiel comprenant un comparateur (62) et un commutateur (63) commandable électroniquement,
    le comparateur du deuxième circuit partiel étant configuré pour détecter une différence de tension négative entre la source de tension (1) et la tension au niveau du sous-ensemble électronique et pour commander le commutateur (63) en fonction de cela,
    le commutateur (63) étant branché en série avec le sous-ensemble électronique (4),

**caractérisé en ce que** le comparateur (42, 62) du premier et du deuxième circuit partiel possède un transistor bipolaire commun, sa base étant raccordée à la tension de comparaison par le biais d'une résistance série dans le cas du premier circuit partiel et étant ainsi influencé activement et étant raccordée à la source de tension (1) par le biais de la résistance série et d'une résistance supplémentaire dans le cas du deuxième circuit partiel, le comparateur (42, 62) étant commun au premier et au deuxième circuit partiel.

2. Arrangement de circuit selon la revendication 1, **caractérisé en ce que** les composants du premier circuit partiel sont configurés pour protéger le sous-ensemble électronique (4) contre une surtension positive et les composants du deuxième circuit partiel pour protéger le sous-ensemble électronique (4) contre une surtension négative.

3. Arrangement de circuit selon l'une des revendications 1 à 2, **caractérisé en ce que** le commutateur (43) du premier circuit partiel est réalisé sous la forme d'un transistor autobloquant, son électrode de source étant raccordée à la source de tension (1) et son électrode de drain au sous-ensemble électronique (4) et son électrode de gâchette se référant au potentiel de masse.

4. Arrangement de circuit selon l'une des revendications 1 à 3, **caractérisé en ce que** le commutateur du deuxième circuit partiel est réalisé sous la forme d'un transistor autobloquant, son électrode de source étant raccordée au sous-ensemble électronique (4) et son électrode de drain à la source de tension (1) et son électrode de gâchette se référant au potentiel de masse.

5. Arrangement de circuit selon l'une des revendications 3 et 4, **caractérisé en ce que** le transistor bipolaire du comparateur (42, 62) est raccordé par son émetteur aux électrodes de source et par son collecteur aux électrodes de gâchette des transistors autobloquants respectifs du premier et du deuxième circuit partiel.

6. Arrangement de circuit selon l'une des revendications 3 et 4, **caractérisé en ce que** les électrodes de source et les électrodes de gâchette des transistors autobloquants sont reliées ensemble de manière électriquement conductrice.

7. Arrangement de circuit selon l'une des revendications 1 à 6, **caractérisé en ce que** les commutateurs (43, 63) du premier et du deuxième circuit partiel sont regroupés en un double commutateur en un composant et/ou toutes les résistances de l'arrangement de circuit présentent des valeurs de résistance identiques.

8. Arrangement de circuit selon l'une des revendications 1 à 7, **caractérisé en ce que** le commutateur (63) du deuxième circuit partiel est réalisé sous la forme d'un transistor à effet de champ à couche isolante autobloquant en version à canal N, son électrode de source étant raccordée à l'émetteur et son électrode de gâchette au collecteur du comparateur (62).

9. Arrangement de circuit selon la revendication 8, **caractérisé en ce que** les bornes de gâchette des commutateurs (43, 46) du premier et du deuxième circuit partiel possèdent respectivement des possibilités de raccordement pour introduire des tensions auxiliaires.

10. Arrangement de circuit selon l'une des revendications précédentes, **caractérisé en ce que** la source de tension (1) est réalisée sous la forme d'une batterie de véhicule automobile et le sous-ensemble électronique (4) sous la forme d'un contrôleur ou la source de tension (1) sous la forme d'un contrôleur et le sous-ensemble électronique (4) sous la forme sous la forme d'un capteur.

**Fig. 1**

**Fig. 2**

$R_Q$

2

1

4

## Fig. 3

$U_{IN}$

43

$U_{COMP}$

1

42

4

$U_{OUT}$

## Fig. 4

## Fig. 5

## Fig. 6

# Fig. 7

# Fig. 8

Fig. 9

Fig. 10

Fig. 11

Fig. 12

**Fig. 13**

**Fig. 14**

**Fig. 15**

**Fig. 16**

Fig. 17

EP 3 794 701 B1

**Fig. 18**

**Fig. 19**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070064362 A1
- EP 2632047 A1
- DE 10349282